# EUROPEAN PATENT SPECIFICATION

(11) **EP 2 388 080 B1**
(45) Date of publication and mention of the grant of the patent: **01.05.2013**
(21) Application number: 11173349.9
(22) Date of filing: 23.02.2006
(51) Int. Cl.: B21D 7/08, B21D 7/16, C21D 9/08, C21D 9/00, B60J 5/04

(54) **Vehicle body reinforcing member**
Fahrzeugaufbauverstärkungselement
Élément de renfort de carrosserie de véhicule

(30) Priority: 02.03.2005 JP 2005057625
(43) Date of publication of application: 23.11.2011
(62) Divisional of application: 06714359.4
(73) Proprietor: Nippon Steel & Sumitomo Metal Corporation, Tokyo 100-8071 (JP); H-One Co., Ltd., Saitama-shi, Saitama 330-0854 (JP); Sumitomo Pipe & Tube Co., Ltd., Kashima-shi, Ibaraki 314-0014 (JP)
(72) Inventor: Moroi, Kenji c/o H-One Co., Ltd., Saitama, 330-0854 (JP); Hattori, Yoshitaka C/o H-One Co., Ltd., Saitama, 330-0854 (JP); Uchida, Mitsutoshi c/o Sumimoto Metal Industries, Ltd., Osaka, 541-0041 (JP); Kikuchi, Fumihiko c/o Sumimoto Pipe & Tube Co., Ltd., Ibaraki, 314-0014 (JP); Inoue, Saburo c/o Sumimoto Pipe & Tube Co., Ltd., Ibaraki, 314-0014 (JP)
(74) Representative: Jackson, Martin Peter

(56) References cited:
- EP-A- 1 340 641
- JP-A- 50 015 774
- JP-A- 2004 051 065

## Description

### FIELD OF THE INVENTION

The present invention relates to a vehicle body reinforcing member that can demonstrate excellent impact resistance during a vehicle body collision and can also reduce the weight of the vehicle body. More specifically, the present invention relates to a vehicle body reinforcing member that can further improve impact resistance during a vehicle body collision by increasing rigidity and improving buckling resistance. The present invention further relates to a method of manufacturing such a reinforcing member.

### BACKGROUND OF THE INVENTION

In the automobile industry in recent years, the demand for vehicle body safety has increased, and the development of technologies to protect occupants during a collision has been promoted. In conjunction with these trends, the structure of every part of the vehicle body, including the doors, has been
revised to improve occupant protection performance, and the use of reinforcing members to protect occupants has been studied.

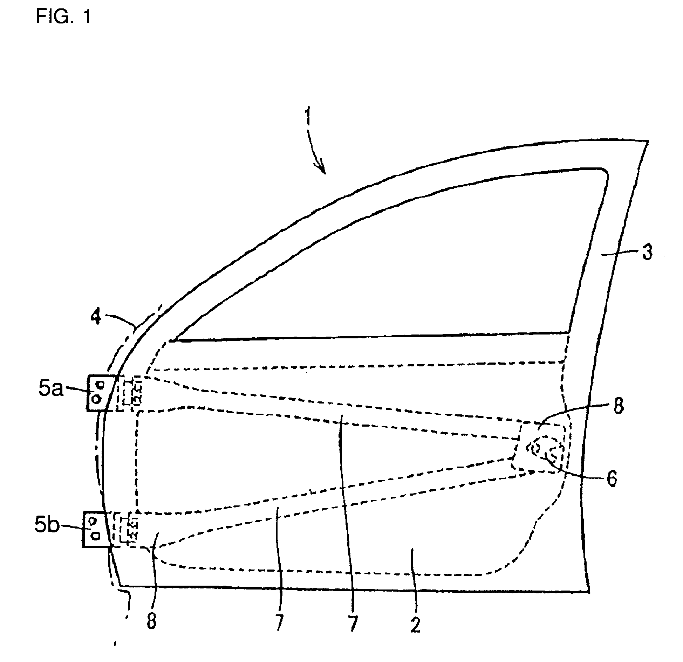

For example, FIG. 1 is a drawing that shows a vehicle body structure that uses reinforcing members in an automobile door as door impact bars. A door 1 is an automobile door that is structured such that a window frame 3 is integrally formed as a one-piece with an upper portion of a door inner 2, and a door outer (not shown in the figure) is joined to an outer side of the door inner 2. Further, a front edge of the door 1 (on the left side of the figure) is attached to a vehicle body 4 by upper and lower hinges 5a, 5b. At a rear edge of the door (on the right side of the figure), a door lock 6 is provided at a middle height level of the door inner 2. This structure allows the door to open and close freely, and to be held by the door lock 6 when closed.

The door impact bars (reinforcing members) 7 have brackets 8 at both ends to join them to the vehicle body. In the structure of the reinforcing members shown in FIG. 1, the brackets 8 are joined to the hinges 5 and the door lock 6. Therefore, the structure is such that one of the door impact bars 7 is mounted between the portion where the upper hinge 5a is attached and the portion where the door lock 6 is attached, and the other door impact bar 7 is mounted between the portion where the lower hinge 5b is attached and the portion where the door lock 6 is attached.

The structure of the reinforcing members shown in FIG. 1 is such that the brackets that are used for joining the reinforcing members to the vehicle body are provided at the ends of tubes. However, another structure that may be used is a so-called bracketless structure in which the brackets are not provided at both ends of the reinforcing members, and both ends of the reinforcing members are joined directly to the vehicle body.

Recently, due to automobile fuel economy regulations and the need to reduce costs, the demand to reduce the weight of an automobile body has become stronger. Therefore, the demand to promote weight reduction has become stronger even for reinforcing members that increase safety. A variety of proposals have been made to address this demand.

In Japanese Patent No. JP-2811226, proposed is a steel tube for reinforcing a vehicle body that reduces weight by using a high-strength steel tube or steel sheet as a reinforcing member. The steel tube for reinforcing a vehicle body has a tensile strength of at least 120 kgf/mm² (1180 MPa) and an elongation of at least 10%, and it is used as a door impact bar that is a steel tube for reinforcing a door, or as a bumper core material, and the like. The above characteristics of the steel tube is perceived to result in that by selecting a steel tube shape in relation to the use conditions, the steel tube for reinforcing a vehicle body can be made lighter in weight and can effectively absorb impact energy.

Furthermore, in Japanese Patent Application Publication No. JP-2002-144872, a door structure is proposed in which an impact bar is arranged such that it is inclined in the longitudinal direction of the vehicle body and a portion of the impact bar that faces a door outer panel is curved along and in the proximity of a curved surface of the door outer. If the proposed door structure is used, while tensile stiffness and bending resistance in relation to an impact load are imparted to the impact bar, compression resistance is additionally obtained, ensuring sufficient strength without using such methods as enlarging the cross section shape of the impact bar, increasing its thickness and the like.

Also, in Japanese Patent Application Publication No. JP-Hei 4(1992)-280924, a method is disclosed for heating a straight steel pipe by direct electric resistance heating and hardening the steel pipe by spraying it with liquid coolant while pressing a die such that the steel pipe takes a desired curved shape, so as for a door guard beam to follow the contour of a rounded shape of a door by bending the pipe. The method focuses on the fact that, for reasons of automobile design, an automobile door tends to have a rounded shape.

### DISCLOSURE OF THE INVENTION

For a vehicle body reinforcing member that uses a steel tube as described above, there are limits to using a high-strength steel tube as the reinforcing member as a way to respond to the demand for vehicle body weight reduction. Therefore, to provide better impact resistance, an attempt has been made to utilize constraint in the axial direction by curving the reinforcing member along a curved surface of a door outer of a door frame.

As shown in FIG. 1, a door impact bar, as one type of automobile body reinforcing member, is provided with brackets at both ends as necessary, and is joined to a highly rigid vehicle body through hinges and a door lock portion. Thus the actual length of the impact bar along the curved surface is greater than the linear distance between the points where the ends of the impact bar are joined to the vehicle body.

Therefore, when an impact load is exerted on the impact bar during a side collision onto the side surface of the door frame, the impact load is dispersed forwards and backwards in the vehicle body, in a longitudinal direction of the impact bar, causing opposite ends of the impact bar to stretch forwards and backwards in the vehicle body, in a longitudinal direction of the impact bar. It is thus possible to increase the load at which the impact bar starts to deform, which also increases the amount of energy that is absorbed, so the impact resistance is markedly improved.

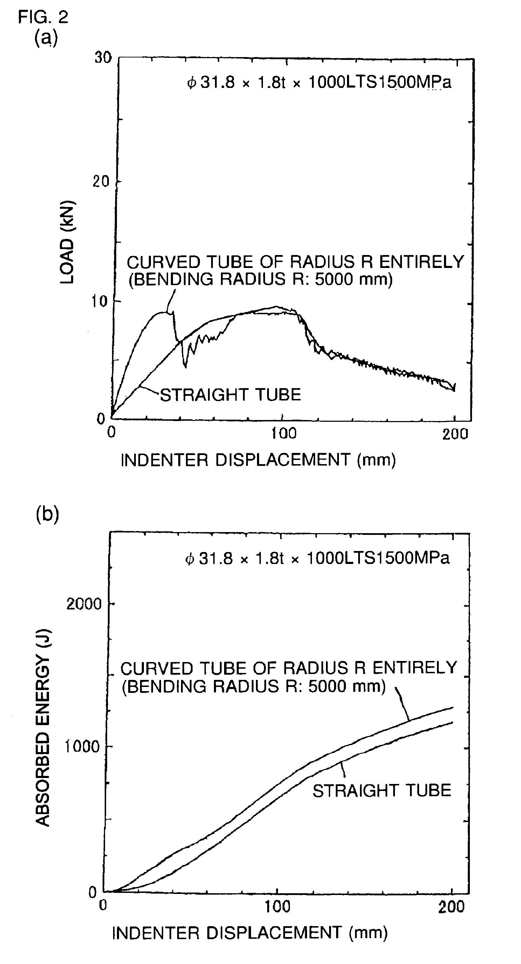

FIG. 2 is a figure that shows results of three-point bending tests when a straight tube and a tube that is bent at a constant bending radius R over its entire length (hereinafter, referred to as "curved tube of radius R entirely") are used as impact bar test pieces. FIG. 2(a) shows the variations in the loads borne by an indenter in relation to the displacement (in millimeters, mm) of the indenter. FIG. 2(b) shows the trends in the amounts of energy absorbed, which are equivalent to the integration values of the loads borne by the indenter, in relation to the displacement (mm) of the indenter.

The test materials were tube test pieces with an outside diameter of 31.8 mm, a wall thickness of 1.8 mm, a length of 1000 mm, and a tensile strength of 1500 MPa. The bending radius R of the "curved tube of radius R entirely" was 5000 mm. Furthermore, the three-point bending tests were conducted using a three-point bending test machine, with opposite ends of each of test pieces supported constrainedly, so as to be able to evaluate the deformation behavior of an actual impact bar that is joined to a vehicle body.

According to the results shown in FIG. 2, the deformation behavior exhibited by the straight tube is such that, as the displacement of the indenter increases, the load that exerts on the indenter increases until it reaches a maximum load, then gradually decreases. The turnaround to a decreasing load halfway through the indenter displacement occurs because the test piece can no longer bear the load and starts to either flatten or buckle.

In contrast, the "curved tube of radius R entirely" shows a rapid increase in the load exerted on the indenter when deformation starts, followed by a decrease after a maximum value is reached and then by the identical deformation behavior to that of the straight tube. Therefore, using the "curved tube of radius R entirely" makes it possible to increase the load at which deformation starts, thus enabling to increase the amount of absorbed energy and to improve the impact resistance.

Incidentally, because awareness of environmental protection has increased recently, the demand for automobile body weight reduction has become even stronger. Therefore, the demands for studies of thoroughgoing weight reduction and improved stability of impact, resistance quality have become stronger, even for reinforcing members that increase safety.

For example, in a case where a "curved tube of radius R entirely" is processed, if a door guard beam bending method described in Japanese Patent Application Publication No. JP-Hei4(1992)-280924 is used, the method is to heat a straight steel pipe by direct electric resistance heating and harden the steel pipe by spraying it with liquid coolant while pressing a die against the pipe. This method makes it difficult to achieve uniform cooling and hardening over the entire length and circumference of the reinforcing member, so uneven hardening becomes a concern.

Therefore, the quality of the door guard beam created by the bending process described in Japanese Patent Application Publication No. JP-Hei 4(1992)-280924 is unstable, due to the uneven hardening. The non-uniform deformation makes it impossible to ensure dimensional precision and shape fixability, so a product with the required stability of impact resistance quality cannot be achieved.

Furthermore, a "curved tube of radius R entirely", used as a vehicle body reinforcing member, can absorb more energy than the known straight tube and can improve the impact resistance to a certain extent. However, with regard to automobile performance, the demands for further weight reduction, lower fuel consumption, more occupants compartment space, and improved safety have become even stronger. In order to respond to these demands, the vehicle body reinforcing member must have even better energy absorption characteristics and better overall impact resistance quality.

It is an object of the present invention to address the problems described above so as to provide a vehicle body reinforcing member with impact resistance that is superior to that of a vehicle body reinforcing member with the use of a known straight tube, and most of all, to provide a vehicle body reinforcing member with impact resistance that is superior to the impact resistance of a vehicle body reinforcing member with the use of a curved tube of radius R entirely, wherein the weight of the member is reduced, the energy absorption characteristics during a vehicle body collision is improved, and the stability of impact resistance quality is achieved.

In order to achieve the objectives described above, the inventors thoroughly examined the deformation behavior of vehicle body reinforcing members that had a variety of different shapes. As shown in FIG. 2, the "curved tube of radius R entirely" exhibits better energy absorption characteristics than does the straight tube. However, when an attempt was made to further improve the energy absorption characteristics, it was discovered that there are limits to extending the technological concept (active effect) of the "curved tube of radius R entirely".

Specifically, the active effect of the "curved tube of radius R entirely" is to cause the load that is borne by the vehicle body reinforcing member to reach its maximum immediately after the impact load is exerted to the vehicle body reinforcing member, as shown in FIG. 2(a), thereby increasing the amount of absorbed energy, as shown in FIG. 2(b). Thus, in a case where the "curved tube of radius R entirely" is used, the deformation behavior (borne load characteristics) after the borne load reaches its maximum is exactly the same as that of the straight tube. Therefore, the question of how to increase the amount of energy that the vehicle body reinforcing member absorbs comes down to how to cause the borne load to reach its maximum immediately after the impact.

The inventors, while keeping in mind the increasing of the borne load as much as possible immediately after the impact, focused their attention on the start of the buckling of the vehicle body reinforcing member, regardless of the maximizing of the borne load immediately after the impact, which had been neglected and abandoned not only in the case where the straight tube was used but also in the case where the "curved tube of radius R entirely" was used. Specifically, the inventors focused on the question of how it would be possible to delay the start of the buckling of the vehicle body reinforcing member. In other words, the inventors thought that if the start of the buckling could be delayed, it would be possible to improve the energy absorption characteristics of the vehicle body reinforcing member.

In the case where the "curved tube of radius R entirely" is used, the reason that the borne load reaches its maximum immediately after the impact is that the vehicle body reinforcing member is curved over its entire length in the direction of the impact load (projected toward the outside of the vehicle body). However, the inventors conceived of providing a bend that is curved in the direction of the impact load (projected toward the outside of the vehicle body) (hereinafter called an "outwardly projecting bent portion") at the location that receives the impact load and providing, adjacent to the location that receives the impact load, a straight portion or a bend that is curved in the direction of repelling the impact load (projected toward the inside of the vehicle body) (hereinafter called an "inwardly projecting bent portion").

Specifically, the inventors found that although the "outwardly projecting bent portion" can withstand the borne load to a certain extent with respect to the impact load, the "outwardly projecting bent portion" should not be intended to be used to try to maximize the borne load. The inventors also found that it would be effective to disperse the borne load promptly to the inwardly projecting bent portion and/or the straight portion, which are not effective for the impact load.

In other words, while excessive deformation of the vehicle body reinforcing member under the impact load is prevented by the "outwardly projecting bent portion", the impact load is dispersed to the "inwardly projecting bent portion" or the straight portion adjacent to the "outwardly projecting bent portion". The reason this is done is that it was found that dispersing the load exerted on the "outwardly projecting bent portion", which is the point on which the load acts, such that the impact load is borne over the wide range of the entire vehicle body reinforcing member, makes it possible to delay the start of the buckling of the vehicle body reinforcing member as a result.

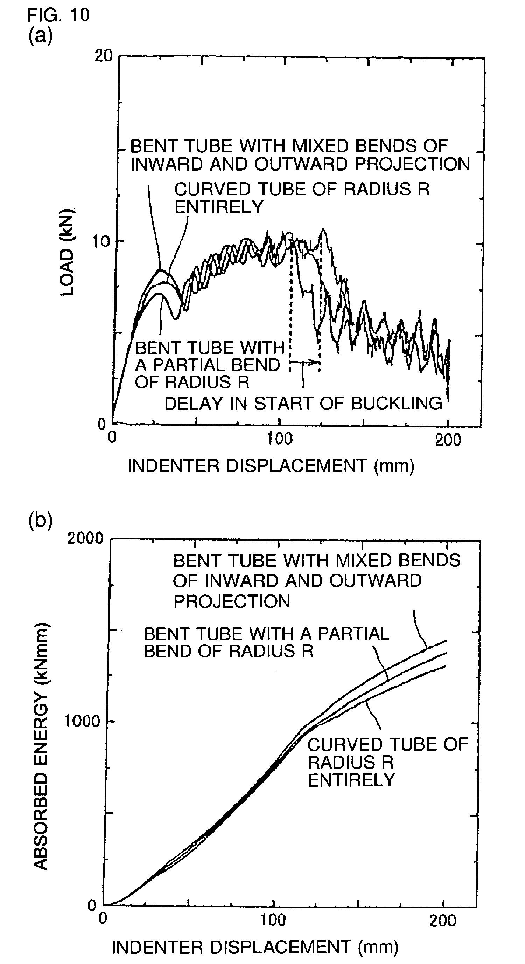

Test results based on the findings described above are shown in FIG. 10, which is described later. FIG. 10 shows results of three-point bending tests that used test_pieces of the "curved tube of radius R entirely" and a bent tube that has a partial bend that is bent with a bending radius R (hereinafter called a "bent tube with a partial bend of radius R"). As FIG. 10 shows, using the "bent tube with a partial bend of radius R" or the like makes it possible to delay the start of the buckling, which in turn makes it possible to increase the amount of energy that is absorbed. The mechanism by which this is accomplished will be explained below.

### (Comparison of the "curved tube of radius R entirely" and the "bent tube with a partial bend of radius R)

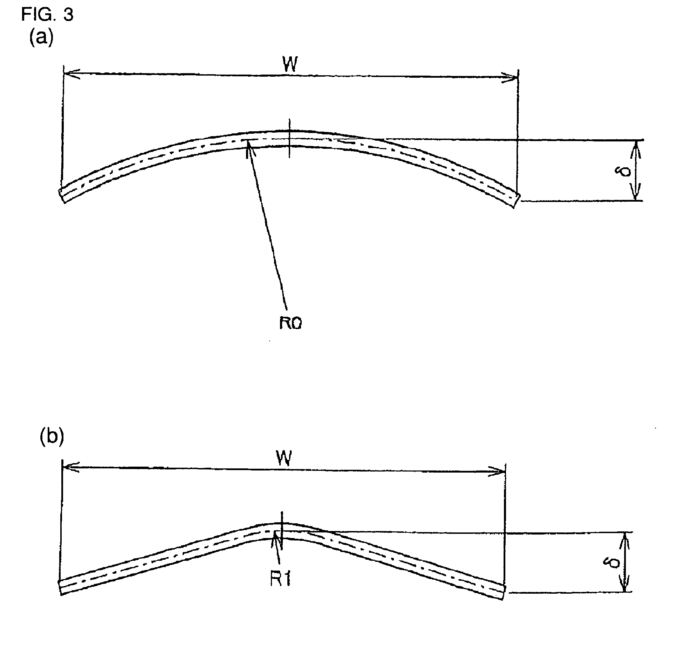

FIG. 3 is an explanatory figure of the overall shapes of the "curved the with mono-radius R entirely" and the "bent tube with a partial bend of radius R", which said tubes are used as vehicle body reinforcing members. FIG. 3(a) shows the "curved tube of radius R entirely", and FIG. 3(b) shows the "bent tube with a partial bend of radius R". In a case where such a tube with radius is mounted in a door frame as a vehicle body reinforcing member, the impact bar is provided with an overall length W and a projection distance 6 that allow it to be accommodated within the clearance space of the door frame.

The "curved tube of radius R entirely" shown in FIG. 3(a) has a single bending radius R0 over the entire length of the member. The "bent tube with a partial bend of radius R" shown in FIG. 3(b) is formed with an outwardly projecting bent portion with a bending radius R1 at one location in a middle length portion of the reinforcing member. The portions adjacent to the bent portion on both sides are structured as straight portions.

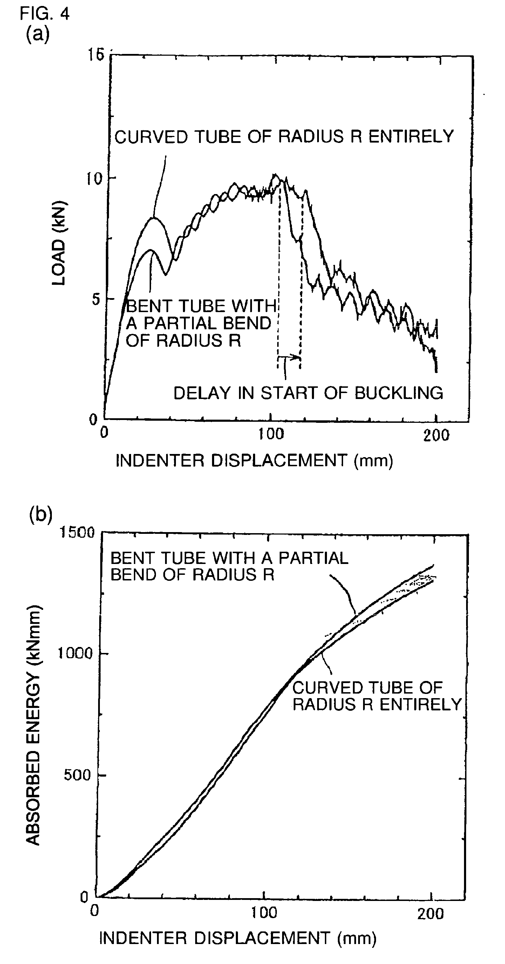

FIG. 4 is a figure that shows results of three-point bending tests when the "curved tube of radius R entirely" and the "bent tube with a partial bend of radius R" are used as test pieces. FIG. 4(a) shows the variations in the loads borne by the indenter in relation to the displacement (mm) of the indenter. FIG. 4(b) shows the trends in the amounts of absorbed energy, which are equivalent to the numeric integration values of the loads borne by the indenter, in relation to the displacement (mm) of the indenter.

The test materials were tube test pieces with an outside diameter of 31.8 mm, a wall thickness of 1.8 mm, a length of 1000 mm, and a tensile strength of 1500 MPa. The bending radius of the "curved tube of radius R entirely" was 6200 mm. The curvature 1/R of the "bent tube with a partial bend of radius R" was set to 0.8 m⁻¹. The tests were conducted using a three-point bending test machine; with opposite ends of each of the test pieces,supported constrainedly. Here, the curvature indicates the extent of the bending of the bent portion of the member and is represented by 1/R when the bending radius of the bent portion is R.

As shown in FIG. 4, for the"bent tube with a partial bend of radius R", the start of the buckling after the maximum impact load is reached comes later than for the "curved tube with mono-radius entirely", and the amount of absorbed energy thereof, as shown by the numeric integration value of the accompanying borne load, is greater than for the "curved tube of radius R entirely". The test results shown in FIG. 4 also indicate that the maximum load tends to be slightly higher for the "bent tube with a partial bend of radius R". These effects make it possible for the "bent tube with a partial bend of radius R" to exhibit superior impact resistance characteristics.

The delay in the start of the buckling of and the accompanying increase in the amount of absorbed energy by the "bent tube with a partial bend of radius R" are dependent on the curvature 1/R of the "bent tube with a partial bend of radius R". Specifically, increasing the curvature 1/R, that is, decreasing the bending radius R of the bent portion, makes it possible to increase the amount of absorbed energy.

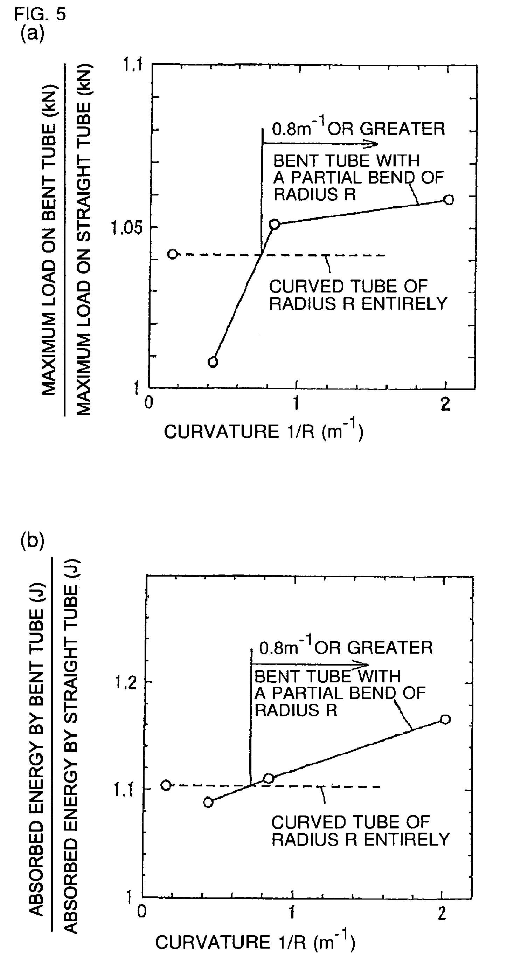

FIG. 5 is a figure that shows an effect of the curvature 1/R of the "bent tube with a partial bend of radius R", using, as a reference, the characteristics of the "curved tube of radius R entirely" (bending radius 6200 mm). FIG. 5(a) shows the ratio of the maximum load on the "bent tube with a partial bend of radius R" to the maximum load on the straight tube when the curvature 1/R of the "bent tube with a partial bend of radius R" is set to 0.4, 0.8, and 2.0 respectively. The ratio of the maximum load on the "curved tube of radius R entirely" (bending radius 6200 mm) to the maximum load on the straight tube is shown as a reference.

In the same manner, FIG. 5(b) shows the ratio of the absorbed energy by the "bent tube with a partial bend of radius R" to that by the straight tube when the curvature 1/R of the "bent tube with a partial bend of radius R" is set to 0.4, 0.8, and 2.0. The ratio of the absorbed energy by the "curved tube of radius R entirely" (bending radius 6200 mm) to the energy absorbed by the straight tube is shown as a reference.

The test results shown in FIG. 5 indicate that when the curvature 1/R of the "bent tube with a partial bend of radius R" is small, the ratio of the maximum load on the "bent tube with a partial bend of radius R" to the maximum load on the straight tube remains at a low value, as does the ratio of the absorbed energy by the "bent tube with a partial bend of radius R" to that by the straight tube. However, increasing the curvature 1/R of the "bent tube with a partial bend of radius R" to at least 0.8 m⁻¹, for example, allows the "bent tube with a partial bend of radius R" to exhibit characteristics that are superior to those exhibited by the "curved tube of radius R entirely" (bending radius 6200 mm).

### (Comparison of a "curved tube of radius R entirely" and a "bent tube with multiple bends of radius R")

As described above, using the "bent tube with a partial bend of radius R" makes it possible to delay the start of the buckling that accompanies the exertion of the impact load and to increase the amount of absorbed energy. However, as shown in FIG. 4(a), a phenomenon is observed in which the ramp load in the initial loading period thereof is lower than for the "curved tube of radius R entirely", thus creating concern that the impact resistance will also be lower.

Accordingly, using a bent tube that is provided with straight portions adjacent to outwardly projecting bent portions at a plurality of locations over the entire length of the member (hereinafter called a "bent tube with multiple bends of radius R") makes it possible to achieve a ramp load in the initial loading period that is at least equivalent to that achieved by the "curved tube of radius R entirely" and to increase the amount of absorbed energy.

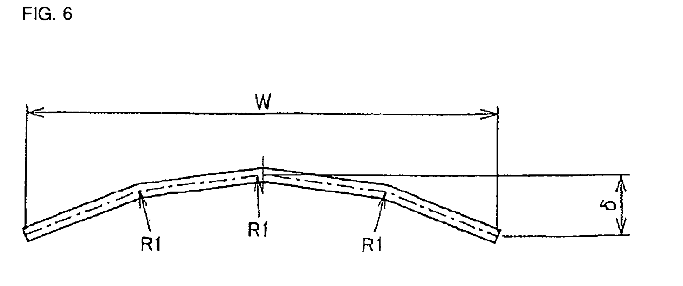

FIG. 6 is an explanatory figure of an overall shape of the "bent tube with multiple bends of radius R" that can be used as a vehicle body reinforcing member. The "bent tube with multiple bends of radius R" shown in FIG. 6 has outwardly projecting bent portions with a bending radius R1 (curvature 1/R1) at three locations. On one or each side adjacent to each of the bent portions, a straight portion is connected, and the bent tube is provided with an overall length W and a projection distance 6 that allow it to be accommodated within the clearance space of the door frame.

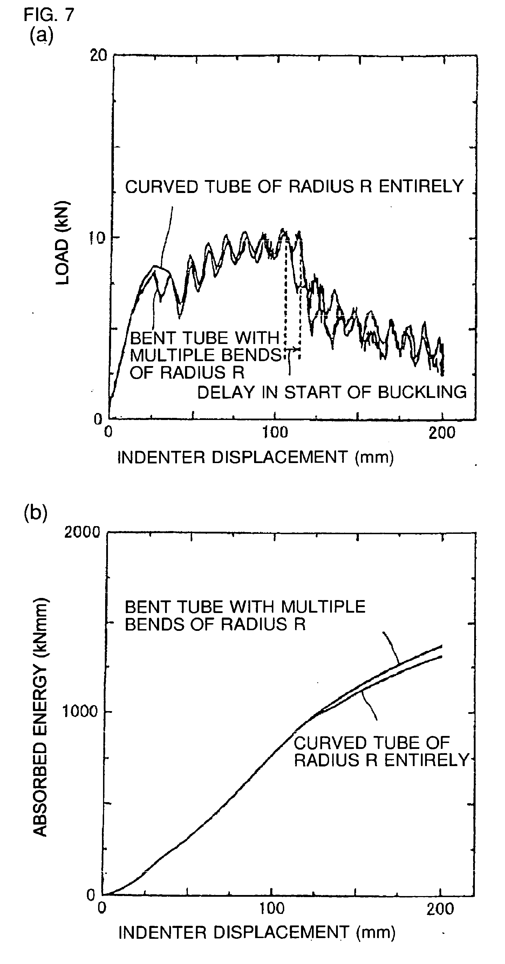

FIG. 7 is a figure that shows results of three-point bending tests when the "curved tube of radius R entirely" and the "bent tube with multiple bends of radius R" are used as test pieces. FIG. 7(a) shows the variations in the loads borne by the indenter in relation to the displacement (mm) of the indenter. FIG. 7(b) shows the trends in the amounts of absorbed energy, which are equivalent to the numeric integration values of the loads borne by the indenter, in relation to the displacement (mm) of the indenter.

The test pieces were made of tube materials with an outside diameter of 31.8 mm, a wall thickness of 1.8 mm, a length of 1000 mm, and a tensile strength of 1500 MPa. The bending radius of the "curved tube of radius R entirely" was 6200 mm. For the "bent tube with multiple bends of radius R", the curvature 1/R of each outwardly projecting bent portion as shown in FIG. 6 was set to 2.0 m⁻¹ (R: 500 mm). The tests were conducted using a three-point bending test machine, with both ends of each of the test pieces supported constrainedly.

As shown in FIG. 7, using the "bent tube with multiple bends of radius R" makes it possible to ensure a ramp load in the initial loading period that is equivalent to that of the "curved tube of radius R entirely".. In addition, the start of the buckling can be delayed, so the amount of absorbed energy can be increased.

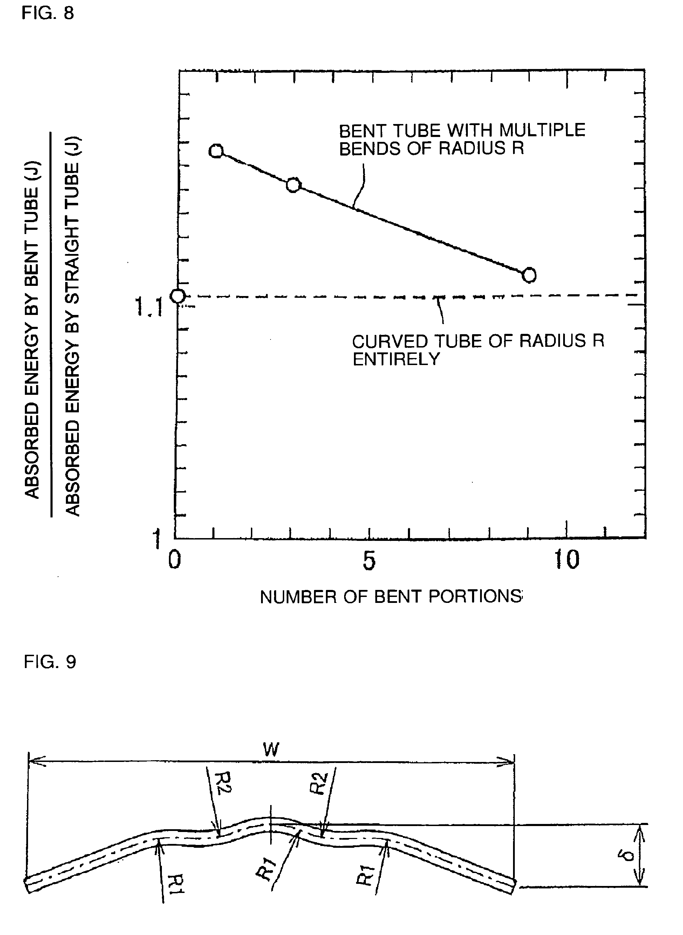

FIG. 8 is a figure that shows an effect of the plural bent portions and its adjacent straight portions that are provided in the "bent tube with multiple bends of radius R", using, as a reference, the characteristics of the "curved tube of radius R entirely" (bending radius 6200 mm). FIG. 8 shows the ratio of the absorbed energy by the tube "bent tube with multiple bends of radius R" to the absorbed energy by the straight tube when the "outwardly projecting bent portions" are provided at 1 to 9 locations over the entire length of the "bent tube with multiple bends of radius R". The ratio of the energy absorbed by the "curved tube of radius R entirely" (R: 6200 mm) to the energy absorbed by the straight tube is shown as a reference.

As shown in FIG. 8, even in the "bent tube with multiple bends of radius R", increasing the number of locations with the outwardly projecting bent portions makes it possible to ensure a ramp load in the initial loading period that is equivalent to that of the "curved tube of radius R entirely". However, it is understood that as the number of locations of the "outwardly projecting bent portions" increases, the effect of delaying the start of the buckling gradually diminishes, decreasing the amount of absorbed energy. Therefore, in a case where the "bent tube with multiple bends of radius R" is used, it is desirable to limit the number of outwardly projecting bent portions to around nine (9).

### (Comparison of the "curved tube of radius R entirely", the "bent tube with a partial bend of radius R", and the "bent tube of mixed bends of inward and outward projection ")

As described above, using the "bent tube with multiple bends of radius R" makes it possible to ensure a ramp load in the initial loading period that is equivalent to that of the "curved tube of radius R entirely". In addition, the start of the buckling can be delayed, so the amount of energy that is absorbed can be increased. However, as the number of locations with outwardly projecting bent portions increases, the amount of absorbed energy decreases until it becomes equivalent to that of the "curved tube of radius R entirely".
An effective way to prevent this from happening and to amplify the effect of delaying the start of the buckling is to use a bent tube that has inwardly projecting bent portions adjacent to the outwardly projecting bent portions with the bending radius R hereinafter, referred to as "bent tube with mixed bends of inward and outward projection".

FIG. 9 is an explanatory figure of an overall shape of the "bent tube with mixed bends of inward and outward projection", which tube can be used as a vehicle body reinforcing member. The "bent tube with mixed bends of inward and outward projection" shown in FIG. 9 has outwardly projecting bent portions with a bending radius R1 (curvature 1/R1) at three locations, and is structured to have inwardly projecting bent portions, reversely bent portions, with a bending radius R2 (curvature 1/R2), between the outwardly projecting bent portions. The tube is provided with an overall length W and a projection distance 6 that allow it to be mounted within the clearance space of the door frame.

In the three-point bending test, deformation is ordinarily concentrated only in the vicinity of the point on which the load acts, where the indenter is in contact with the test piece. However, the providing of the inwardly projecting bent portions as shown in FIG. 9 provides relatively weak locations, such that the deformation caused by the load can be dispersed. Because of this effect, in the "bent tube with mixed bends of inward and outward projection", absorption of the strain energy that is associated with the impact undergoes over a wider range. The concentration of deformation at the point on which the load acts can therefore be moderated, and the displacement prior to the start of the buckling can be significantly increased.

FIG. 10 is a figure that shows results of three-point bending tests when the "curved tube of radius R entirely", the "bent tube with a partial bend of radius R", and the "bent tube with mixed bends of inward and outward projection" are used as test pieces. FIG. 10(a) shows the variations in the loads borne by the indenter in relation to the displacement (mm) of the indenter. FIG. 10(b) shows the trends in the amounts of absorbed energy, which are equivalent to the numeric integration values of the loads borne by the indenter, in relation to the displacement (mm) of the indenter.

The test pieces were made of tube materials with an outside diameter of 31.8 mm, a wall thickness of 1.8 mm, a length of 1000 mm, and a tensile strength of 1500 MPa. The bending radius R of the "curved tube of radius R entirely" was 6200 mm. The curvature 1/R of the "bent tube with a partial bend of radius R" was set to 0.8 m⁻¹. The "bent tube with mixed bends of inward and outward projection" had the shape that is shown in FIG. 9, the curvature 1/R1 of each outwardly projecting bent portion was set to 2.0 m⁻¹ (R1: 500 mm), and the curvature 1/R2 of each inwardly projecting bent portion, reverse bent portion, was set to 1.0 m⁻¹ (R2: 1000 mm). The tests were conducted using a three-point bending test machine, with both ends of each of the test pieces supported constrainedly.

As shown in FIG. 10, using the "bent tube with mixed bends of inward and outward projection" makes it possible to ensure a ramp load in the initial loading period that is equivalent to that of the "curved tube of radius R entirely". In addition, the start of the buckling can be delayed longer than with the "bent tube with a partial bend of radius R", so the amount of absorbed energy can be increased.

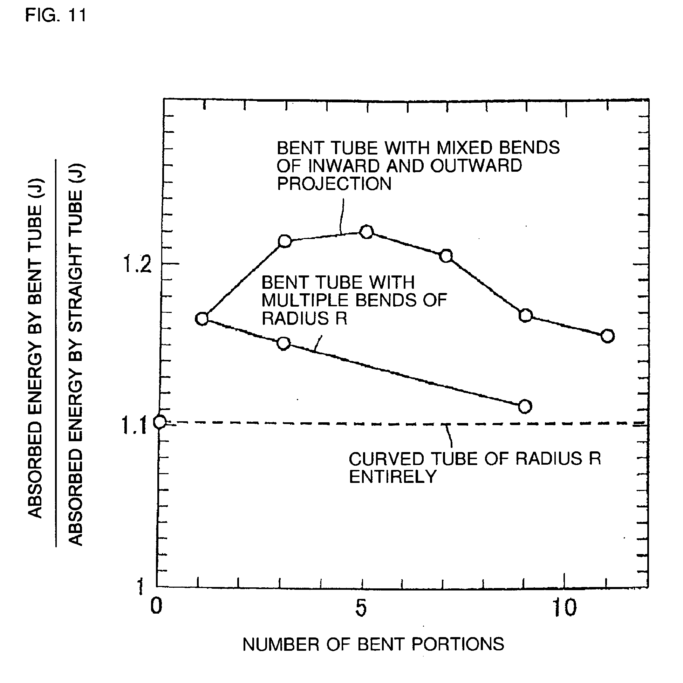

FIG. 11 is a figure that shows an effect of the plural portions that are outwardly bent and the plural portions that are inwardly bent in the opposite direction, reversely bent, that are provided in the "bent tube with mixed bends of inward and outward projection", using, as a reference, the characteristics of the "curved tube of radius R entirely" (bending radius 6200 mm). FIG. 11 shows the ratio of the absorbed energy by the "bent tube with multiple bends of radius R" to the absorbed energy by the straight tube, wherein the outwardly projecting bent portions and the straight portions are provided at 1 to 9 locations over the entire length of the "bent tube with multiple bends of radius R", and also shows the ratio of the absorbed energy by the "bent tube with mixed bends of inward and outward projection" to the absorbed energy absorbed the straight tube, wherein the outwardly projecting bent portions and the inwardly projecting bent portions are respectively provided at 1 to 5 locations over the entire length of the "bent tube with mixed bends of inward and outward projection". The ratio of the energy absorbed by the "curved tube of radius R entirely" (R: 6200 mm) to the energy absorbed by the straight tube is shown as a reference.

As shown in FIG. 11, for the "bent tube with multiple bends of radius R", as the number of locations with the outwardly projecting bent portions increases, the effect of increasing the amount of absorbed energy diminishes by delaying the start of the buckling. However, for the "bent tube with mixed bends of inward and outward projection", it is understood that providing the inwardly projecting bent portions maintains the effect of increasing the amount of absorbed energy, regardless of the number of locations that are provided with the inwardly projecting bent portions.

The mechanism by which the "bent tube with mixed bends of inward and outward projection" exhibits its superior effect can be explained by analyzing the distribution of the strain energy density (kN · mm/kg). Portions where great strain energy is localized are likely to buckle, so distributing the strain energy over a wide range with respect to a load imposed from outside makes it possible to enhance the delay in the start of the buckling.

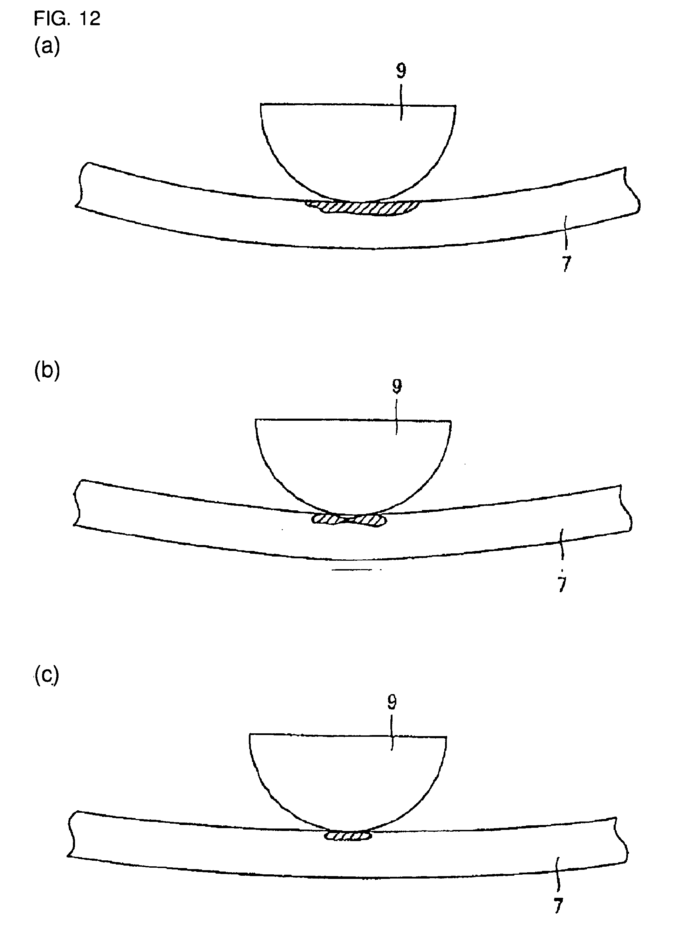

FIG. 12 is a figure that shows in simulated form results of an analysis of the distribution of the strain energy density (kN · mm/kg) in three-point bending tests that use, as test pieces, the "curved tube of radius R entirely", the "bent tube with a partial bend of radius R", and the "bent tube with mixed bends of inward and outward projection". FIG. 12(a) shows the results for the "curved tube of radius R entirely". FIG. 12(b) shows the results for the "bent tube with a partial bend of radius R". FIG. 12(c) shows the results for the "bent tube with mixed bends of inward and outward projection". Test pieces 7 are the same ones that were used for the three-point bending tests whose results are shown in FIG. 10. The shaded areas in FIG. 12 indicate the distribution areas where the strain energy density associated with the load of the indenter 9 is at least 4500 kN · mm/kg.

According to the detailed analysis of the distribution of the strain energy density (kN · mm/kg), it is understood that using the "bent tube with mixed bends of inward and outward projection" narrows the distribution area where the strain energy density is at least 4500 kN · mm/kg in the position where the load is applied, indicating that the strain energy is spread over a wide range outside that area. Specifically, in the "bent tube with mixed bends of inward and outward projection", the inwardly projecting bent portions exhibit an effect of mitigating the impact, so the strain energy is not concentrated in the outwardly projecting bent portions that are the positions where the load is applied. As a result, a large displacement can be contained up to the point when the buckling starts, so the amount of absorbed energy can be increased.

In addition to the findings described above, the inventors showed that configuring the cross section shape of the vehicle body reinforcing member to be a circle, an oblong, or a shape that is similar to a circle or an oblong is an effective way to ensure even better buckling strength. The inventors also showed that a combination of successive incremental heating using high-frequency induction heating, successive incremental bending, and successive incremental uniform cooling was an effective way to form the outwardly projecting bent portion in one location or in a plurality of locations in the member, as well as to form the inwardly projecting bent portion or the straight portion adjacent to the outwardly projecting bent portion.
JP 2004-51065 discloses a vehicle body reinforcing member with a single outwardly projecting bent portion.

The present invention was completed based on the findings described above.
The present invention provides a vehicle body reinforcing member according to claim 1.

In an embodiment, it is desirable for the curvature of the outwardly projecting bent portion in at least one location that receives impact from outside the vehicle body to be at least 0.8 m⁻¹. Furthermore, an end portion of the vehicle body reinforcing member can be structured to be a straight portion, or another outwardly projecting bent portion that has a different curvature than that of the outwardly projecting bent portion at the middle length location, or an inwardly projecting bent portion that has a different curvature than that of the outwardly projecting bent portion at the middle length location.

In an embodiment, it is desirable for the cross section shape of the metal tube as the starting material for the vehicle body reinforcing member to be one of a circle, an oblong, a shape that is similar to a circle, and a shape that is similar to an oblong.
It is also desirable for the outwardly projecting bent portions and the inwardly projecting bent portion to be formed, while moving successively in the axial direction the metal tube as the starting material, by using a high-frequency induction heating coil that is arranged around an outer circumference of the metal tube to heat a localized portion of the metal tube to a temperature range in which plastic deformation is possible and a temperature range in which hardening is possible, then forming the bent portion by imparting a bending moment to the heated portion, immediately followed by rapidly cooling the heated portion.

In an embodiment, a press-formed part can be used instead of the metal tube as the starting material. Furthermore, the vehicle body reinforcing member can be arranged in any part of the vehicle body to protect an occupant during a collision and can, for example, be used as one of a door impact bar, a front bumper beam, a rear bumper beam, a cross member, a front pillar reinforcement, a center pillar reinforcement, a side sill, and the like.

The vehicle body reinforcing member according to the present invention can, during a vehicle body collision, absorb more energy than and exhibit better impact resistance than a vehicle body reinforcing member that uses the known straight tube or the "curved tube of radius R entirely".
Thus the dimensions (outside diameter, wall thickness) of the metal tube that is used as the vehicle body reinforcing member can be reduced, and the tube shape can be revised, while impact resistance is maintained. It is also possible to provide the ever higher required level of vehicle body impact resistance at the same time that the vehicle body weight is reduced and the cost is lowered.

### BRIEF DESCRIPTION OF THE DRAWINGS

FIG. 1 is a figure that shows a vehicle body structure that uses reinforcing members in an automobile door as door impact bars;
FIG. 2 is a figure that shows results of three-point bending tests when a straight tube and a tube that is bent over its entire length are used as impact bar test pieces;
FIG. 3 is an explanatory figure of overall shapes of a "curved tube of radius R entirely" and a "bent tube with a partial bend of radius R", which tubes are used as vehicle body reinforcing members;
FIG. 4 is a figure that shows results of three-point bending tests when the "curved tube of radius R entirely" and the "bent tube with a partial bend of radius R" are used as test pieces;
FIG. 5 is a figure that shows an effect of the curvature 1/R of the "bent tube with a partial bend of radius R", using, as a reference, the characteristics of the "curved tube of radius R entierly (bending radius 6200 mm)";
FIG. 6 is an explanatory figure of an overall shape of a "bent tube with multiple bends of radius R", which tube can be used as a vehicle body reinforcing member;
FIG. 7 is a figure that shows results of three-point bending tests when the "curved tube of radius R entirely" and the "bent tube with multiple bends of radius R" are used as test pieces;
FIG. 8 is a figure that shows an effect of the plural bent portions that are provided in the "bent tube with multiple bends of radius R", using, as a reference, the characteristics of the "curved tube of radius R entirely(bending radius 6200 mm)";
FIG. 9 is an explanatory figure of an overall shape of a "bent tube with mixed bends of inward and outward projection", which tube can be used as a vehicle body reinforcing member;
FIG. 10 is a figure that shows results of three-point bending tests when the "curved tube of radius R entirely", the "bent tube with a partial bend of radius R", and the "bent tube with mixed bends of inward and outward projection" are used as test pieces;
FIG. 11 is a figure that shows an effect of the plural portions that are outwardly bent and the plural portions that are inwardly bent, reversely bent, that are provided in the "bent tube with mixed bends of inward and outward projection", using, as a reference, the characteristics of the "curved tube of radius R entirely (bending radius 6200 mm)";
FIG. 12 is a figure that schematically shows results of an analysis of the distribution of strain energy density (kN · mm/kg) in three-point bending tests that use test pieces of the "curved tube of radius R entirely", the "bent tube with a partial bend of radius R", and the "bent tube with mixed bends of inward and outward projection";
FIG. 13 is a figure that shows examples of other shapes of the "bent tube with multiple bends of radius R";
FIG. 14 is a figure that shows examples of shapes of the "bent tube with mixed bends of inward and outward projection" as the vehicle body reinforcing member;
FIG. 15 is a figure that shows cross section shapes that can be used for a metal tube for use in a vehicle body reinforcement according to the present invention, showing examples of circular and oblong cross section shapes;
FIG. 16 is a figure that shows cross section shapes that can be used for the metal tube for use in a vehicle body reinforcement according to the present invention, showing examples of cross section shapes that are similar to circles and oblongs;
FIG. 17 is an explanatory figure that shows a schematic structure of a high-frequency induction heating and bending unit that is used to form a bent portion in the metal tube for use in a vehicle body reinforcement according to the present invention, also showing, as an example, a procedure for processing the "bent tube with mixed bends of inward and outward projection";
FIG. 18 is a figure that shows structures of a bumper beam and a cross member in which the vehicle body reinforcing member according to the present invention is used to protect occupants during a collision;
FIG. 19 is a figure that shows structures of a front pillar reinforcement and a center front pillar reinforcement in which the vehicle body reinforcing member according to the present invention is used to protect occupants during a collision;
FIG. 20 is an explanatory figure that shows a method that is used in Example 2 for cold bending;
FIG. 21 is an explanatory figure that shows a method that is used in Example 2 for bending an entire length of a tube by heating the entire length of the tube;
FIG. 22 is an explanatory figure that shows measurement positions for a Vickers hardness test;
FIG. 23 is an explanatory figure that shows a procedure that is used in Example 2 for measuring residual stress;
FIG. 24 is an explanatory figure that shows a structure of a delayed failure test unit that is used in Example 2; and
FIG. 25 is a figure that shows shapes of press-formed parts that are used in Example 3, FIGS. 25(b) and 25(c) showing overall shapes of formed parts that are tested as examples of the present invention and FIG. 25(d) showing a cross section shape of an example of the present invention.

### BEST MODE FOR CARRYING OUT THE INVENTION

A vehicle body reinforcing member according to the present invention will be explained with reference to the drawings.

### (Examples of shapes of a "bent tube with a partial bend of radius R", a "bent tube with multiple bends of radius R", and a "bent tube with mixed bends of inward and outward projection")

An example of a shape of the "bent tube with a partial bend of radius R" as one of the vehicle body reinforcing member according to the present invention, as shown in FIG. 3(b), has a bent portion with a bending radius R1 the outer side of the bent portion projecting outward. Adjacent to and on both sides of the bent portion, straight portions are disposed. The tube has an overall length W and a projection distance 6 to allow it to be mounted in the clearance space of a door frame.

An example of a shape of the "bent tube with multiple bends of radius R" is shown in FIG. 6. The tube has outwardly projecting bent portions with a bending radius R1 (curvature 1/R1) at three locations. Between the bent portions, straight portions are disposed. The tube has an overall length W and a projection distance 6 to allow it to be mounted in the clearance space of a door frame.

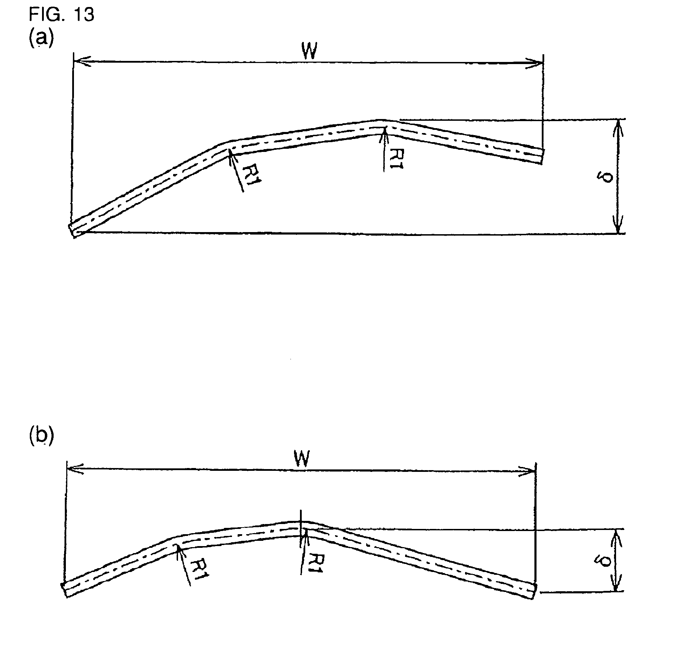

FIG. 13 is a figure that shows examples of other shapes of the "bent tube with multiple bends of radius R". The tubes in FIGS. 13(a) and 13(b) each have bent portions with a bending radius R1 (curvature 1/R1) at two locations, with the outer sides of the bent portions projecting outward. The end portions of each tube and the portions between the bent portions are configured to be straight portions. Note that in FIGS. 3, 6, and 13, the upward direction on paper indicates the outward direction in the door frame.

Whichever one is used of the tubes shown in FIGS. 13(a) and 13(b) with the plural portions that are bent at radius R, it is possible to increase the ramp load in the initial loading period more than for the "bent tube with a partial bend of radius R", which makes it possible to increase the amount of absorbed energy. However, as the number of outwardly projecting bent portions increases, the phenomenon of a delay in the start of buckling diminishes, so the effect of increasing absorbed energy is reduced. It is therefore desirable to limit the number of bent portions to around nine(9).

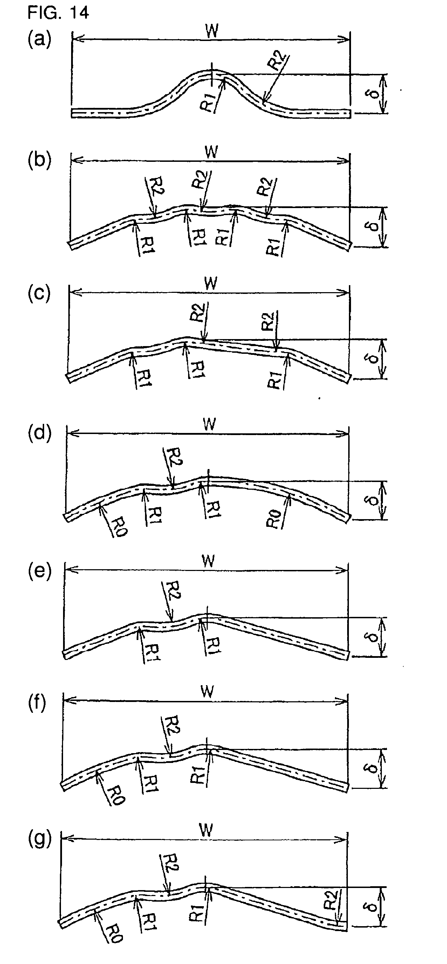

FIG. 14 is a figure that shows examples of shapes of the "bent tube with mixed bends of inward and outward projection" as one of the vehicle body reinforcing member. The "bent tube with mixed bends of inward and outward projection" in FIG. 14(a), not in accordance with the present invention, has an outwardly projecting bent portion with a bending radius R1 (curvature 1/R1) at one location. Adjacent portions on both sides of the outwardly projecting bent portion are structured as inwardly projecting bent portions each with a bending radius R2 (curvature 1/R2) or straight portions. Even in this case, the tube has an overall length W and a projection distance 6 to allow it to be arranged in the clearance space of a door frame. In FIG. 14, the upward direction on paper indicates the outward direction in the door frame.

In a similar manner as shown in FIG. 9, each of the "bent tube with mixed bends of inward and outward projection" that is shown in FIGS. 14(b) to 14(g) has outwardly projecting bent portions each with a bending radius R1 (curvature 1/R1) at two to four locations. Adjacent portions on one side or on both sides of each of the outwardly projecting bent portions are structured as inwardly projecting bent portions, reversely bent, each with a bending radius R2 (curvature 1/R2) or are structured as a straight portion and an inwardly projecting bent portion.

In FIG. 14, for descriptive purposes, the outwardly projecting bent portions are shown with a bending radius R1 each, and the inwardly projecting bent portions are shown with a bending radius R2 each. However, it is not necessary for the individual bent portion to use the same bending radius, and different bending radii can be used as one sees fit. For example, as shown in FIGS. 14(d), 14(f), and 14(g), a bent portion with a greater bending radius R0 can be provided in an end portion of the member. In addition, an inwardly projecting bent portion with a greater bending radius can be provided. Note that in FIG. 14, it is assumed that R0 is greater than R2 and that R2 is greater than R1.

In the "bent tube with mixed bends of inward and outward projection" shown in FIG. 14, the inwardly projecting bent portion is the region that is relatively weak with respect to impact, so it can disperse the impact load. This makes it possible for the member to bear over a wider range the strain energy that accompanies an impact, so the start of buckling can be significantly delayed, and the amount of absorbed energy can be further increased.

In the vehicle body reinforcing member according to the present invention, it is desirable for an outwardly projecting bent portion in at least one location that receives impact from outside the vehicle body to have a curvature of at least 0.8 m⁻¹. As shown in FIG. 5, when the curvature 1/R of an outwardly projecting bent portion that receives impact is small, there is little difference in the amount of absorbed energy between the bent tube and a straight tube. However, when the curvature 1/R of the outwardly projecting bent portion is greater, for example, if it is at least 0.8 m⁻¹, the amount of absorbed energy increases markedly.

The vehicle body reinforcing member according to the present invention is arranged such that the outwardly projecting bent portion is aligned in the outward direction of the vehicle body. However, the structure may be such that brackets are provided that are used to join the ends of the member to the vehicle body and the brackets are joined to the vehicle body. A so-called bracketless structure may also be used in which the brackets are not provided at both ends of the reinforcing member, and the end portions of the reinforcing member are joined directly to the vehicle body.
When the vehicle body reinforcing member according to the present invention is joined to the vehicle body, the member can be structured such that the ends of the member are straight portions. The member can also be structured such that the ends of the member are outwardly projecting bent portions having a different curvature from that of the aforementioned outwardly projecting bent portion. The member can also be structured such that the ends of the member are inwardly projecting bent portions having a different curvature from that of the aforementioned outwardly projecting bent portion.

### (Cross section shape of vehicle body reinforcing member)

As described above, further weight reduction is being demanded for automobile parts and the like. In order to reduce weight, it is desirable for the wall thickness of the vehicle body reinforcing member to be as thin as possible. However, in order to ensure impact resistance, it is also important for the member to resist flattening deformation in relation to bending displacement, so that the specified bending strength and energy absorption can be 'ensured' and buckling strength during a collision can be obtained.
From this perspective, it is desirable for the cross section shape of a metal tube that is used as the vehicle body reinforcing member according to the present invention to be circular or oblong, or to be approximately circular or oblong.

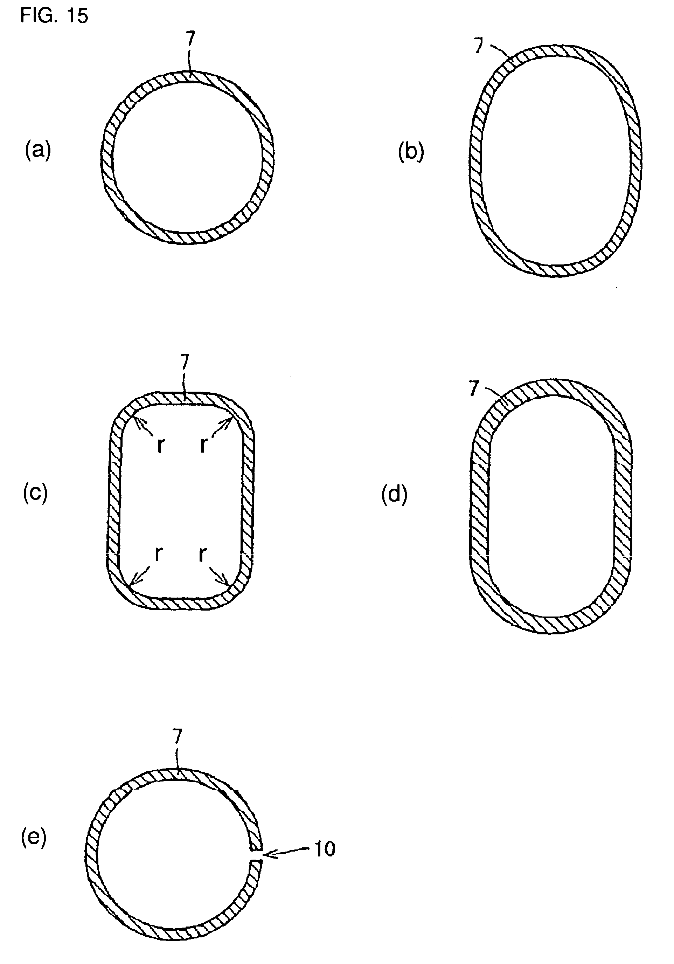

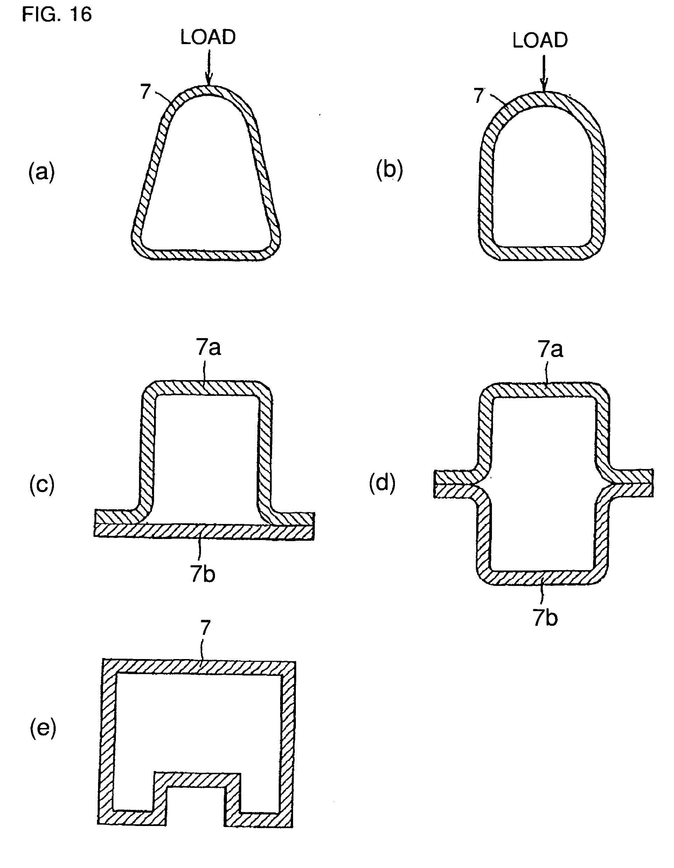

FIGS. 15 and 16 are figures that show cross section shapes that can be used for a metal tube for use in the vehicle body reinforcing member according to the present invention. FIGS. 15(a) to 15(e) are figures that show examples of circular and oblong cross section shapes. The shapes are stable with respect to buckling in the circumferential direction and can be used without a sudden decrease in strength to resist deformation up to a point of where the deformation becomes great.

FIG. 15(c) shows a rectangular shape whose four corners have a radius of r. FIG. 15(d) shows an oval shape. Both shapes have two major sides that are straight line portions, which significantly increases their bending stiffness.
FIG. 15(e) is a figure that shows another example of a circular cross section shape, structured as an open tube that has a longitudinal slit 10 over the entire length of a metal tube 7 for use in a vehicle body reinforcement. In this case, it is easy to expand the slit 10 at both ends to integrally form bracket portions with flat surfaces. If the metal tube for the vehicle body reinforcement with the cross section shape shown in FIG. 15(e) is used, a welding process or the like required in a tube-making process becomes unnecessary, so the cost can be reduced while the specified impact resistance is ensured.

FIGS. 16(a) to 16(e) are figures that show cross section shapes that are similar to circles and oblongs. A bell shape that is shown in FIG. 16(a) is a variation of a circular shape. The shape has a smaller radius at the top segment than a round tube in view of the downward loading direction, which increases its buckling resistance. The square segment at the bottom thereof increases the section modulus, which increases the maximum load that the shape can withstand.

FIG. 16(b) shows a semi-cylindrical shape that has two major sides that are straight line portions, as well as another straight side as opposing to the segment that receives the load. This shape increases the buckling resistance and greatly increases the bending stiffness.
FIGS. 16(c) and 16(d) show closed cross section shapes that are formed by welding press-formed parts 7a, 7b. These cross sections can be adopted for metal tubes with different shapes in the longitudinal direction and for metal tubes with complex cross section shapes, while ensuring the specified impact resistance.
FIG. 16(e) shows another example of a complex, closed cross section shape that is suitable in cases where the cross section shape is limited by restrictions on the mounting space, as in a bumper beam and a center pillar reinforcement.

### (Successive incremental heating, successive incremental bending, and successive incremental cooling of metal tube for a vehicle body reinforcement)

Various types of bending methods can be used to form a bent tube for the metal tube for use in a vehicle body reinforcement according to the present invention. For example, press bending, tension bending, compression bending, roller bending, extrusion bending, eccentric plug bending, and the like can be used.

There are cases where a high-strength metal tube with a tensile strength exceeding 1000 MPa is used, but in these cases careful consideration of the bending method is important. Generally, the bending is done using a metal tube blank with a tensile strength of around 500 to 700 MPa as the starting material, after which the strength is increased by heat treatment to produce a high-strength metal tube.

However, given the recent demands to increase a vehicle body impact resistance, it is anticipated that even a bent tube will be required to have a quality level equivalent to that of a straight tube. Therefore, in a case where a high-strength metal tube is produced by heat treatment after the starting material is bent, it is difficult to prevent deformation if a method is used in which a straight pipe is directly electrically heated and then hardened over its entire length and circumference, as is proposed in Japanese Patent Application Publication No. JP-Hei04(1992)-280924.

If weight reduction of the metal tube is considered as well, it is desirable to select a material with a tensile strength of at least 1300 MPa, and it is even more desirable to select a material in the 1470 MPa class, in order to reliably ensure the strength of the material with respect to industrial technology. Accordingly, when a bent portion is formed in the metal tube for a vehicle body reinforcement according to the present invention, the specified high strength is ensured by using a high-frequency induction heating coil to heat a localized portion of the metal tube and then successively incrementally bending the heated portion, after which the bent portion is hardened by rapid cooling.

This method inhibits uneven hardening in several ways. Springback that is caused by residual stress is inhibited, because the bending is done while the tube is being in a heated state. A heavy load is not required for the bending process, because the heating makes it easier to plastically deform the material. Moreover, excellent shape precision is obtained, because the rapid cooling after the bending fixes the shape. The cross section is heated-and-then-uniformly cooled in successive steps. Because uneven hardening is thus inhibited, this method makes it possible to ensure stable quality, with almost no deformation caused by residual stress that is attributable to uneven hardening and with almost no variation in strength.

For example, in a case where a steel tube is bent, a localized portion of the tube blank that is the workpiece material is first heated by the high-frequency induction heating coil to a temperature that is at least the A₃ transformation point, but at which the microstructure of the material does not become coarse-grained. Tools are used to plastically deform the heated portion, then water or other liquid coolant, or a gas, is immediately injected uniformly on the outer surface or the inner and outer surfaces of the tube blank to ensure a cooling rate of at least 100°C/second.

Because the steel tube thus bent is cooled uniformly, good shape fixability and uniform hardness can be obtained, excessive residual stress can be inhibited, and excellent delayed failure resistance can be provided, regardless of the high strength. A steel tube with even greater strength, more uniform hardness distribution, and better delayed failure resistance can be produced by incorporating, in the material design, chemical elements that facilitate hardening, like titanium (Ti) and boron (B), for example.

The bending process according to the present invention not only makes it possible to produce a high-strength metal tube by heating a low-strength metal tube blank as the starting material, then increasing its strength by hardening it. It also makes it possible to produce a metal tube with even better impact resistance by reheating and bending an already hardened, high-strength metal tube blank, then hardening it for a second time to give it a finer-grained structure.
Therefore, the demand for greater vehicle body impact resistance can be satisfied by using the successive incremental heating, successive incremental bending, and successive incremental cooling according to the present invention, even in a case where the bent portion is formed in the metal tube for use in a vehicle body reinforcement.

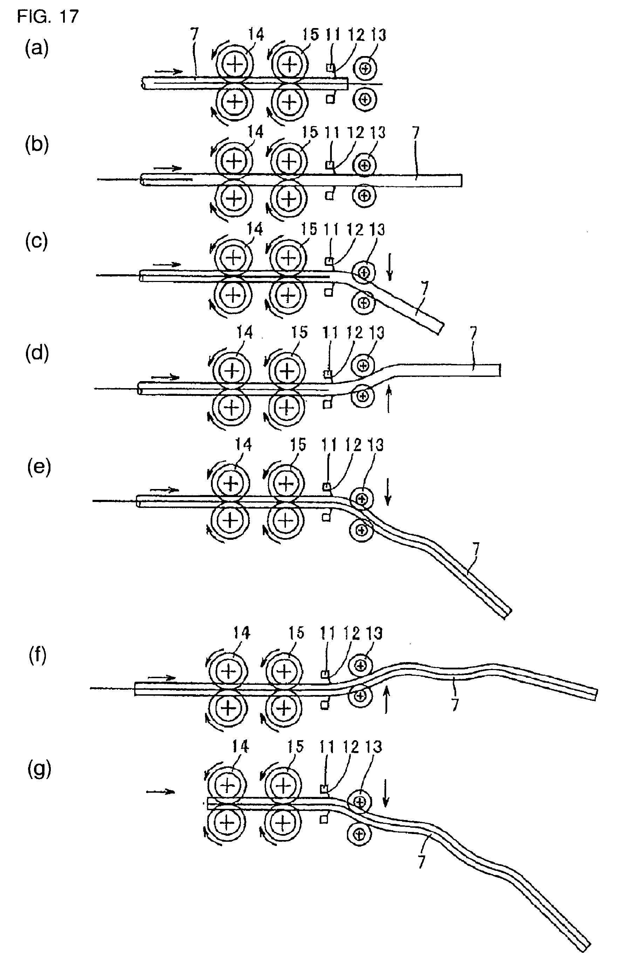

FIG. 17 is an explanatory figure that shows a schematic structure of a high-frequency induction heating and bending unit that is used to form a bent portion in the metal tube for use in a vehicle body reinforcement according to the present invention. FIG. 17 also shows, as an example, a procedure for processing the "bent tube with mixed bends of inward and outward projection". FIG. 17(a) shows a state in which the metal tube is set in the unit. FIG. 17(b) shows a state in which an end portion of the metal tube is hardened as being a straight portion, without being bent. FIG. 17(c) shows a state in which a first outwardly projecting bent portion is processed. FIG. 17(d) shows a state in which a first inwardly projecting bent portion is processed. FIG. 17(e) shows a state in which a second outwardly projecting bent portion that makes up a middle length portion is processed. FIG. 17(f) shows a state in which a second inwardly projecting bent portion is processed.. FIG. 17(g) shows a state in which a third outwardly projecting bent portion is processed.

The structure of the unit is such that, starting from an entrance side, guide rollers 14, 15 are arranged that successively guide and move the metal tube 7, and a ring-shaped induction heating coil 11 is arranged on an exit side. Close to the exit side of the induction heating coil 11 is arranged a cooling unit 12 that sprays a cooling water to harden and to fix the shape of the metal tube 7 after it is heated. The induction heating coil 11 and the cooling unit 12 can prevent the flattening that accompanies bending to the extent that the ring-shaped heated width of the metal tube 7 is small, so it is desirable for the induction heating coil 11 and the cooling unit 12 to be as close as possible to one another, and it is even more desirable for the induction heating coil 11 and the cooling unit 12 to be built as a single structure.
In addition, a pair of offset rollers 13 is arranged on the exit side of the induction heating coil 11 and the cooling unit 12. The offset rollers 13 force to perform bending on the ring-shaped heated portion of the metal tube 7 by making contact with the metal tube 7 such that a bending moment is imparted to the metal tube 7.

Based on FIGS. 17(a) to 17(g), a procedure will be explained by which the "bent tube with mixed bends of inward and outward projection" is processed. The "bent tube with mixed bends of inward and outward projection" has straight portions at both ends and has three outwardly projecting bent portions and two inwardly projecting bent portions.
As shown in FIG. 17(a), after the metal tube 7 is set in the high-frequency induction heating and bending unit, it is driven by the guide rollers 14, 15 to the offset rollers 13. As shown in FIG. 17(b), only the heat treatment is performed on the end portions of the metal tube 7, and the bending is not performed, so the offset rollers 13 do not make contact with the end portions, and the heat treatment is performed on the straight tube.

Next, as shown in FIG. 17(c), as the guide rollers 14, 15 advance the metal tube 7, the offset rollers 13 shift in the direction indicated by the arrow, making contact with the metal tube 7, imparting a bending moment to the metal tube 7, and performing the bending on the ring-shaped heated portion. After the bending deformation, the ring-shaped heated portion is immediately rapidly cooled and hardened by the cooling unit 12 on the exit side of the induction heating coil 11.

At this time, the strength of the metal tube 7 after hardening is high, so the plastic deformation by the bending moment imparted by the offset rollers 13 occurs only in the ring-shaped heated portion, where the metal strength is low. Excellent shape fixability can thus be obtained. Therefore, the desired bending process can be performed by controlling the feeding of the metal tube 7 in the axial direction and the shifting of the offset rollers 13.

As shown in FIG. 17(d), after the first outwardly projecting bent portion is processed, the first inwardly projecting bent portion is processed by shifting the offset rollers 13 in the opposite direction, as shown by the arrow, while the metal tube 7 is moved in the axial direction. Thereafter, as shown in FIGS. 17(e), 17(f), and 17(g), as the metal tube 7 is moved continuously in the axial direction, the offset rollers 13 make contact with the metal tube 7 according to the bending directions and bent shapes of the bent portions. The offset rollers 13 can form the desired bent portions by imparting the bending moment to the ring-shaped heated portions of the metal tube, thus performing the bending process.

A method such as this can ensure excellent shape fixability and stable quality for a metal tube in which a bent portion is formed, so it can also provide the required level of vehicle body impact resistance. Moreover, even in a case where the bending process is performed using a low-strength metal tube blank as the starting material, the strength can be increased by uniform hardening, and a metal tube can be produced that is equivalent to a metal tube with a tensile strength of at least 1300 MPa and even equivalent to a 1470 MPa class metal tube.

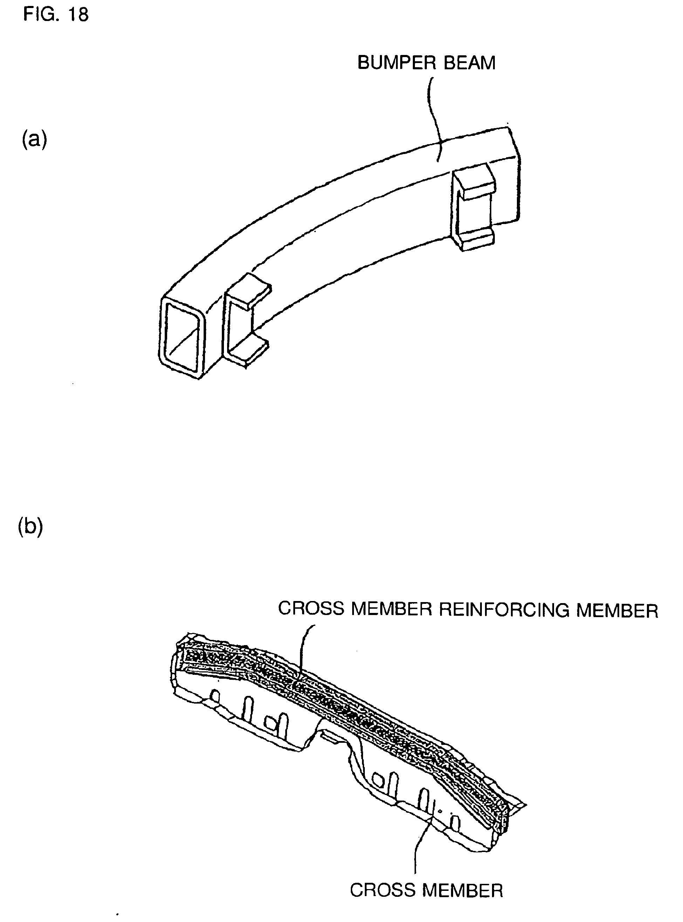

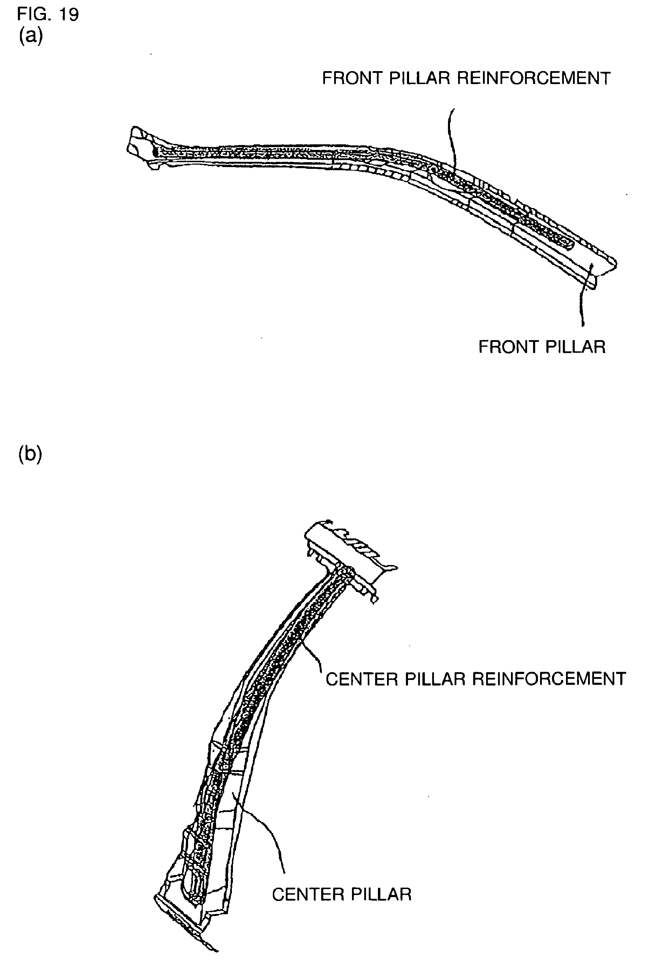

The vehicle body reinforcing member according to the present invention can be assured to have high strength, excellent shape fixability, and stable quality. It can therefore be used as a bumper beam (FIG. 18(a)), a cross member reinforcing member (FIG. 18(b)), a front pillar reinforcement (FIG. 19(a)), a center pillar reinforcement (FIG. 19(b)), a side sill, and the like other than the door impact bars shown in FIG. 1 mentioned above.

### Examples

### (Example 1)

In order to confirm the effects of reducing the wall thickness (reducing the weight) in a case where a steel tube is used as the vehicle body reinforcing member, a 1470 MPa class steel tube test piece was manufactured. The test piece was a "bent tube with multiple bends of radius R", having outwardly projecting bent portions with a bending radius R (curvature 1/R) at three locations and straight portions adjacent to the outwardly projecting bent portions, as shown in FIG. 6. The test piece was made using as the starting material a low-strength tube balnk (YP:450MPa, TS:555MPa, EL:23%) with a typical chemical composition comprising: 0.22% carbon, 1.20% manganese, 0.20% chromium, 0.02% titanium, and 0.0015% boron. The portions of the tube to be bent were successively incrementally heated by high-frequency induction heating to 950°C, then, after being successively incrementally bent while hot, were successively incrementally subjected to a rapid cooling by water at a cooling rate of 300°C/second

The manufactured steel tube test piece had the shape and dimensions shown in Table 1. The tensile strength exceeded 1500 MPa, and the microstructure was martensite and bainite.

A "curved tube of radius R" and having a tensile strength exceeding 1500 MPa and the shape and dimensions shown in Table 1 was prepared as a Comparative Example 1. A straight tube having a tensile strength exceeding 1500 MPa and the outside diameter, wall thickness, and length dimensions shown in Table 1 was prepared as a Comparative Example 2. Bending tests where performed on the Comparative Examples 1 and 2, as well as on the Inventive Examples, using a three-point bending test machine, with both ends of each test piece supported constrainedly and a span of 1000 mm. The ramp loads and the amounts of absorbed energy were measured. The ratios of the ramp load and the amount of absorbed energy with respect to the straight tube (Comparative Example 2) are shown in Table 1.

[Table 1]

**Table 1**

| Test No. | Classification | Steel tube test piece conditions | | | | | Ratios relative to straight tube | |
|---|---|---|---|---|---|---|---|---|
| | | Outside diameter mm | Wall thickness mm | Length W mm | Projection amount δ mm | Bending radius R mm | Ramp load (kH)/(kN) | Absorbed Energy (J)/(J) |
| 1 | Example | 31.8 | 1.6 | 1000 | 20 | 500 | 1.10 | 1.20 |
| 2 | Comparative Example 1 | 31.8 | 1.6 | 1000 | 20 | 6200 | 1.08 | 1.01 |
| 3 | comparative Example 2 | 31.8 | 1.8 | 1000 | 0 | - | 1.00 | 1.00 |

| | | | | | | | | |
|---|---|---|---|---|---|---|---|---|
| Note: Example is a tube with a plurality of portions bent at radius R. Comparative Example 1 is a tube with its entire length bent at radius R. Comparative Example 2 is a straight tube. | | | | | | | | |

It can be understood from the results in Table 1 that using the "bent tube with multiple bends of radius R", makes it possible to absorb more energy and to ensure better impact resistance than with the straight tube and the "curved tube of radius R entirely", despite the thin wall of the Example.

### (Example 2)

A detailed examination was conducted of the characteristics, that is, the tensile strength, the microstructure, the hardness distribution, the shape fixability, the flattening property, the residual stress, and the delayed failure resistance, of a bent steel tube that is used as the vehicle body reinforcing member according to the present invention. Tube blanks with differing strength levels were prepared as the starting materials. The tubes had an outside diameter of 31.8 mm, a wall thickness of 2.3 mm, and a chemical composition comprising 0.22% carbon, 1.20% manganese, 0.20% chromium, 0.02% titanium, and 0.0015% boron. Steel tube test pieces were made by applying the bending process on the prepared tube blanks, and the characteristics were examined. The strength levels of the tube blanks, the bending process conditions, and the strength levels and the microstructure of the steel tube test pieces are shown in Table 2.

[Table 2]

**Table 2**

| Test No. | Classification | Tube blank strength requirements | | | Bending process conditions (Heating - Bending · Cooling) | Steel tube test piece strength requirements (after bending process) | | | |
|---|---|---|---|---|---|---|---|---|---|
| | | YP MPa | TS MPa | EL % | | YP MPa | TS MPa | EL % | Microstructure |
| 4 | Example | 450 | 555 | 23 | Successive incremental heating and bending · Rapid cooling | 1215 | 1639 | 13 | M+B |
| 5 | Example | 1205 | 1625 | 12 | Successive incremental heating and bending · Rapid cooling | 1203 | 1633 | 12 | M+B |
| 6 | Comparative Example 3 | 450 | 555 | 23 | Successive incremental heating _ and bending · Slow cooling | 358 | 462 | 42 | F+P |
| 7 | Comparative Example 4 | 450 | 555 | 23 | Cold bending | 485 | 593 | 20 | F+P |
| 8 | Comparative Example 5 | 1205 | 1625 | 12 | Cold bending | 1205 | 1644 | 11 | M+B |
| 9 | Comparative Example 6 | 450 | 555 | 23 | Entire length heating and bending - Rapid cooling | 1240 | 1686 | 12 | M+B |
| 10 | Comparative Example 7 | 450 | 555 | 23 | Entire length heating and bending - Slow cooling | 345 | 455 | 43 | F+P |
| 11 | Comparative Example 8 | 1205 | 1625 | 12 | Entire length heating and bending - Rapid cooling | 1235 | 1677 | 13 | M+B |

| | | | | | | | | | |
|---|---|---|---|---|---|---|---|---|---|
| Note: In the microstructure column, M is martensite, B is bainite, F is ferrite, and P is pearlite. | | | | | | | | | |

### (1) Bending process conditions, steel tube test piece strength levels, and the like

As shown in Table 2, three types of bending process conditions were used: successive incremental bending by successive incremental heating, cold bending, and bending the entire length by heating the entire length. The steel tube test pieces that were "bent tubes with multiple bends of radius R" having outwardly projecting bent portions at three locations, as shown in FIG. 6. The target processed shape for the steel tube test pieces was an overall length W of 1000 mm and a projection distance 6 of 20 mm. Detailed bending process conditions are shown in Table 3.

[Table 3]

**Table 3**

| Test No. | Classification | workpiece feed rate mm/sec | Heating coil frequency kHz | Heating temperature °C | Cooling conditions | | |
|---|---|---|---|---|---|---|---|
| | | | | | Classification | Cooling procedure | Coolant temperature °C |
| 4 | Example | 15 | 10 | 980 | Liquid cooling | 100L/min | 20 |
| 5 | Example | 15 | 10 | 980 | Liquid cooling | 100L/min | 20 |
| 6 | Comparative Example 3 | 15 | 10 | 980 | Slow cooling | Natural cooling | |
| 7 | Comparative Example 4 | - | - | As-cold | - | - | - |
| 8 | Comparative Example 5 | - | - | As-cold | - | - | - |
| 9 | Comparative Example 6 | - | - | 980 | Liquid cooling | 100L/min | 20 |
| 10 | Comparative Example 7 | - | - | 980 | Slow cooling | Natural cooling | |
| 11 | Comparative Example 8 | - | - | 980 | Liquid cooling | 100L/min | 20 |

First, for the Examples and Comparative Example 3, successive incremental bending by successive incremental heating was used. The tube blank feed rate was 15 mm/ second, and successive incremental bending was performed with the tube blank heated to 980°C by high-frequency induction heating. The subsequent cooling processes were classified into rapid cooling by water cooling to a cooled temperature of 20°C and slow cooling by natural cooling.

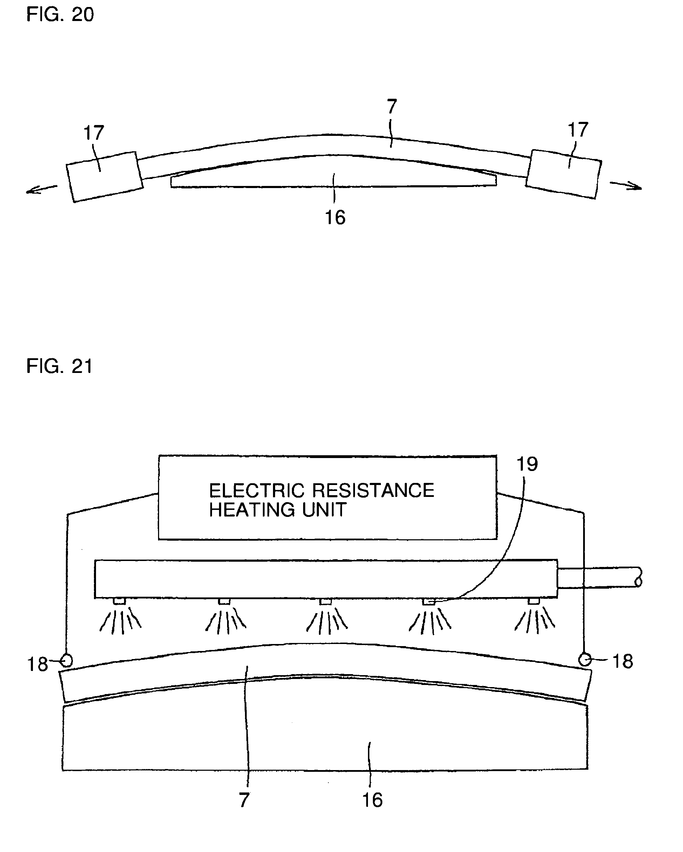

FIG. 20 is an explanatory figure that shows a method that is used in Example 2 for cold bending. For the Comparative Examples 4 and 5, tensile bending in the axial direction was performed as shown in FIG. 20, with the tube blanks at room temperature. Both ends of the tube were held by chucks 17, the tubes were pressed by a bendingjig 16.

FIG. 21 is an explanatory figure that shows a method that is used in Example 2 for bending the entire length of a tube by heating the entire length of the tube. For the Comparative Examples 6 to 8, connecting terminals 18 that apply electric current directly are brought into contact with both ends of the tube blank, as shown in FIG. 21, to heat the tube blank over its entire length. Next, the entire length of the tube blank is press-bent by the bending jig 16. Next, in the cases of rapid cooling, water is sprayed onto the outer surface of the steel tube 7 from cooling nozzles 19 that are provided on the opposite side from the bending jig 16. In the case of slow cooling, natural cooling is done.

After the bending processes, test specimens were taken from the straight portions of the steel tube test pieces. Tensile tests were conduced, and the microstructures of the specimens were observed by means of a microscope. The results are shown in Table 2. The tensile tests were conducted by the method prescribed in JIS Z 2241 using JIS Z 2201 No. 11 type test specimens. For the microstructural observations by microscope, natal etched circumferential cross sections of the tubes were observed at a magnification of 500.

According to the results shown in Table 2, the present invention produced a microstructure having martensite and bainite as its main constituents, and strength in the 1470 MPa class could be ensured. However, the Comparative Example 3, because it was cooled slowly by natural cooling after successive incremental bending by successive incremental heating, produced a microstructure having ferrite and pearlite as its main constituents, so it was not possible to surpass the strength level of the tube blank.

### (2) Measurement of hardness distribution, shape fixability, flattening property, and residual stress in steel tube test pieces

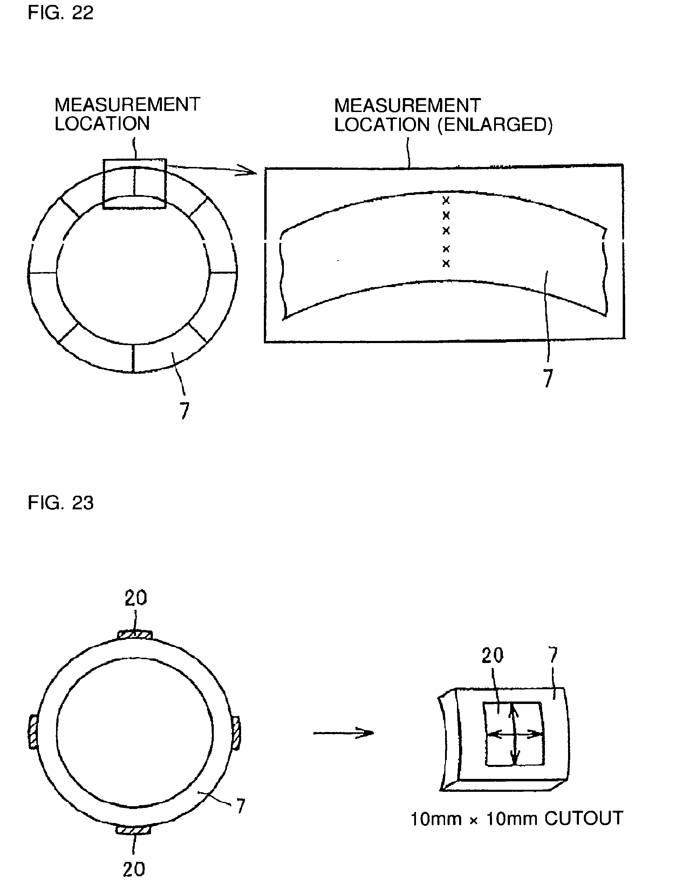

Table 4 shows Vickers hardness test (JIS Z 2244) measurement results for the hardness distribution of the bent portions of the tubes. The test load during the measurement was 1 kg. As shown in FIG. 22, the measurement were made at eight locations at 45-degree intervals around the circumference of the tube. Measurements were made at five positions at each location, for a total of forty measurement positions per steel tube test piece. The hardness uniformity was judged to be acceptable if the difference in any Vickers hardness measurement was less than 100.

[Table 4]

**Table 4**

| Test No. | Classification | Hardness distribution measurement results | | | Hardness uniformity assessment |
|---|---|---|---|---|---|
| | | Maximum hardness Hv(max) | Minimum hardness Hv(min) | Hardness difference Hv (max-min) | |
| 4 | Example | 517 | 491 | 26 | ○ |
| 5 | Example | 511 | 490 | 21 | ○ |
| 6 | Comparative Example 3 | 155 | 145 | 10 | ○ |
| 7 | Comparative Example 4 | 480 | 188 | 292 | × |
| 8 | Comparative Example 5 | 525 | 320 | 205 | × |
| 9 | Comparative Example 6 | 505 | 438 | 67 | × |
| 10 | Comparative Example 7 | 149 | 138 | 11 | ○ |
| 11 | Comparative Example 8 | 518 | 420 | 98 | × |

Table 5 shows measurement results for the shape fixability of the bent portions of the tubes. The steel tube test pieces were manufactured to the target processed shape shown in FIG. 6. The projection distance 6 was measured at the mid-length position of each tube, and the difference between the maximum projection and the minimum projection was also measured. The shape fixability was judged to be acceptable if the difference was not greater than 1.5 mm.

[Table 5]

**Table 5**

| Test No. | Classification | Shape fixability measurement results | | | Shape fixability assessment |
|---|---|---|---|---|---|
| | | Maximum gap Hmax (mm) | Minimum gap Hmin (mm) | Gap difference Hmax-Hmin (mm) | |
| 4 | Example | 21.0 | 19.7 | 1.3 | ○ |
| 5 | Example | 20.8 | 19.5 | 1.3 | ○ |
| 6 | Comparative Example 3 | 22.4 | 18.1 | 4.3 | × |
| 7 | Comparative Example 4 | 22.8 | 18.5 | 4.3 | × |
| 8 | Comparative Example 5 | 19.8 | 15.3 | 4.5 | × |
| 9 | Comparative Example 6 | 22.2 | 17.8 | 4.4 | × |
| 10 | Comparative Example 7 | 23.0 | 18.4 | 4.6 | × |
| 11 | Comparative Example 8 | 22.8 | 18.1 | 4.7 | × |

Table 6 shows measurement results for the flattening property of the bent portions of the tubes. For each steel tube test piece, the outside diameter of the bent portion was measured at four locations around the circumference thereof, and the ratios of the minimum diameter to the maximum diameter were compared. The flattening property was judged to be acceptable if the ratio was 99.0% or greater.

[Table 6]

**Table 6**

| Test No. | Classification | Flattening property measurement results | Flattening property assessment |
|---|---|---|---|
| | | Minimum outside diameter / Maximum outside diameter (Dmin/Dmax%) | |
| 4 | Example | 99.3∼99.6 | ○ |
| 5 | Example | 99.2∼99.7 | ○ |
| 6 | Comparative Example 3 | 93.2∼95.3 | × |
| 7 | Comparative Example 4 | 90.0∼94.0 | × |
| 8 | Comparative Example 5 | 85.0∼90.0 | × |
| 9 | Comparative Example 6 | 91.0∼94.0 | × |
| 10 | Comparative Example 7 | 92.0∼95.0 | × |
| 11 | Comparative Example 8 | 91.5∼95.5 | × |

FIG. 23 is an explanatory figure that shows a procedure that is used in Example 2 for measuring residual stress. A strain gauge 20 was attached at four locations at 90-degree intervals around the circumference of the steel tube test piece 7. Square sections measuring 10 mm × 10 mm were then cut out from the areas where the strain gauge 20 had been attached, and the residual stress was measured by measuring the difference in strain before and after cutting.. Table 7 shows the maximum residual stress values for the bent portions.

[Table 7]

**Table 7**

| Test No. | Classification | Residual stress measurement results |
|---|---|---|
| | | Maximum residual stress (strain gauge) |
| | | (MPa) |
| 4 | Example | -90 |
| 5 | Example | -78 |
| 6 | Comparative Example 3 | -27 |
| 7 | Comparative Example 4 | +251 |
| 8 | Comparative Example 5 | +790 |
| 9 | Comparative Example 6 | +342 |
| 10 | Comparative Example 7 | +110 |
| 11 | Comparative Example 8 | +419 |

### (3) Evaluation of delayed failure resistance

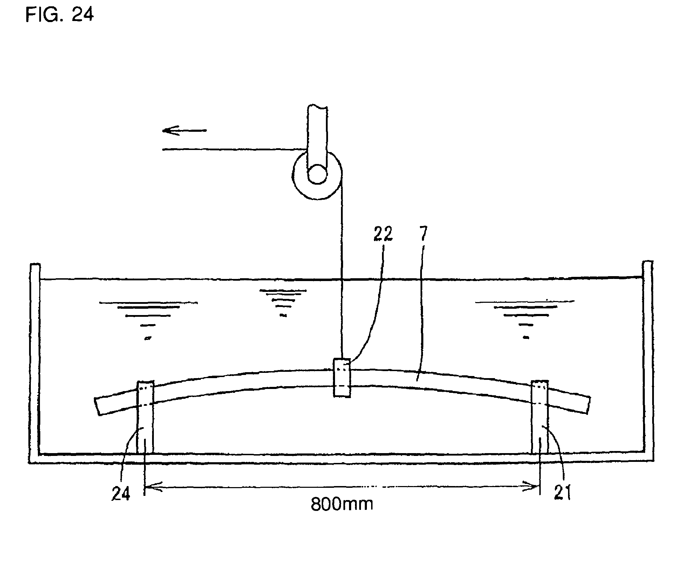

FIG. 24 is an explanatory figure that shows a structure of a delayed failure test unit that is used in Example 2. The steel tube test piece 7 was immersed in artificial seawater containing 0.5% acetic acid, and both ends of an 800 mm sp an were held by fixed jigs 21. A tension jig 22 that was provided in the mid-length portion was used to hold the tube in a state of 400 MPa bending load stress for 1000 hours. At the end of that time, the steel tube test piece 7 was visually inspected for the presence of cracks.
Table 8 shows the evaluation results for delayed failure resistance. The tube was judged to be acceptable if cracks could not be confirmed visually after the delayed failure test.

[Table 8]

**Table 8**

| Test No. | Classification | Delayed failure test conditions | | | | Delayed failure resistance assessment |
|---|---|---|---|---|---|---|
| | | Bending load span | Bending load stress | Soak solution | Soak time | |
| 4 | Example | 800mm | 400MPa (Plumb bob weight : 300kg) | 0.5% Acetic acid + Artificial seawater | 1000Hr | ○ |
| 5 | Example | | | | | ○ |
| 6 | Comparative Example 3 | | | | | ○ |
| 7 | Comparative Example 4 | | | | | ○ |
| 8 | Comparative Example 5 | | | | | × |
| 9 | Comparative Example 6 | | | | | × |
| 10 | Comparative Example 7 | | | | | ○ |
| 11 | Comparative Example 8 | | | | | × |

### (4) Overall evaluation

By using rapid cooling after successive incremental bending by successive incremental heating according to the present invention, it was possible to produce a strength level that amply satisfied 1470 MPa class tensile strength requirements, even when a low-strength tube blank was used as the starting material.- Furthermore, in addition to excellent shape fixability, the present invention provides good hardness uniformity and flattening property over the entire length and entire cross section of the tube. The test results indicate that delayed failure resistance was markedly improved, because the residual stress could be reduced.

In contrast, the Comparative Example 3, for which successive incremental bending by successive incremental heating was used, was judged to have good hardness uniformity, shape fixability, and delayed failure resistance, but because the cooling method was slow cooling, an adequate strength level could not be achieved.

For the Comparative Example 4, a low-strength tube blank was processed by cold bending, so only a slight increase in strength due to work hardening was confirmed. Moreover, springback occurred due to the cold working, and both the shape fixability and the flattening property were poor.

For the Comparative Example 5, a high-strength tube blank was processed by cold bending, so high strength could be ensured despite the slight work hardening, but the shape fixability was poor. The delayed failure resistance was also poor due to the presence of great residual stress.

The Comparative Examples 6 to 8 were heated over their entire lengths and bent over their entire lengths, so large variations occurred in the bent shapes and the shape fixability was poor. The Comparative Examples 6 and 8 achieved high strength, but because the cooling method was to cool the entire tube blanks in one step, the hardening was uneven, and the hardness uniformity was poor. In addition, the uneven hardness led to large residual stress, so the delayed failure resistance was poor. The Comparative Example 7 did not achieve sufficient strength, because it was cooled by slow cooling.

### (Example 3)

In order to confirm the effects of reducing the wall thickness (reducing the weight) in a case where a steel sheet is used as the vehicle body reinforcing member according to the present invention, a 1470 MPa class press-formed part was manufactured with a cross section in the shape of a square letter C. The test piece was made using as the starting material a low-strength steel sheet (YP:450MPa, TS:555MPa, EL:23%) with a typical chemical composition comprising: 0.22% carbon, 1.20% manganese, 0.20% chromium, 0.02% titanium, and 0.0015% boron. The sheet was heated by high-frequency induction heating to 950°C, then, after being press-formed while hot, was cooled and hardened while it remained in the press die.

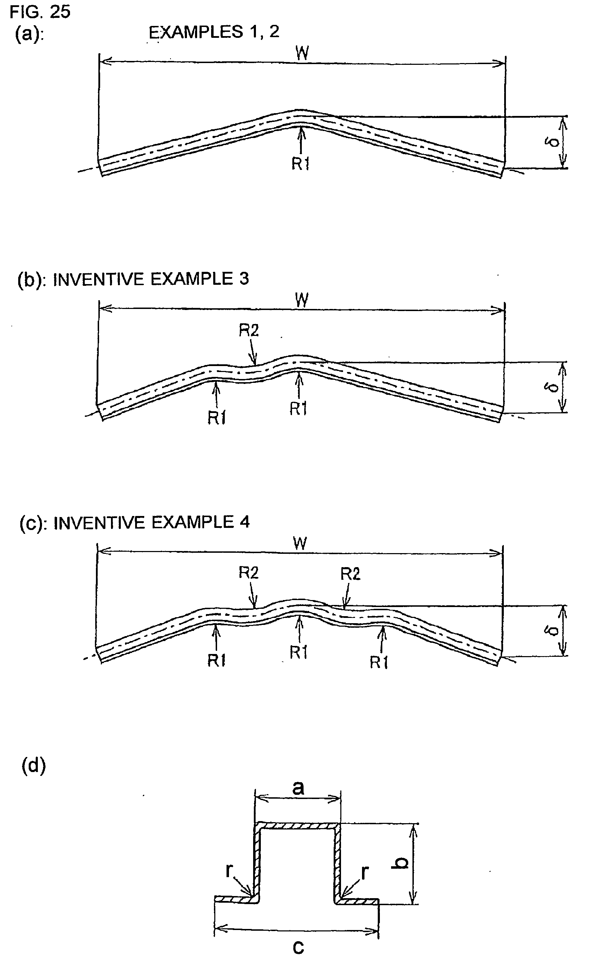

FIG. 25 is a figure that shows shapes of press-formed parts that are used in Example 3. FIG. 25(a) shows an overall shape of formed parts of "bent tubes with a partial bend of radius R" that were tested as Examples 1 and 2 and which do not fall within the scope of the invention. FIG. 25(b) shows an overall shape of a formed part of a "bent tube with mixed bends of outward and inward projection" that was tested as an Example 3. FIG. 25(c) shows an overall shape of a formed part of "bent tube with mixed bends of outward and inward projection" that was tested as an Example 4. FIG. 25(d) shows a cross section shape of the Examples 1 to 4.

The tensile strength of the tested press-formed parts was in the 1500 MPa class, and the main microstructure was martensite and bainite. The dimensions of the cross section shape that is shown in FIG. 25(d) are: a = 30 mm, b = 30 mm, c = 50 mm, and r = 3 mm.

A Comparative Example 1 was also prepared that is a formed part that is bent over its entire length, made of the same material and with a cross section shape made by the same process. A Comparative Example 2 was also prepared that is a straight formed part without any bending, made of the same material and with a cross section shape made by the same process. Bending tests were performed on the Comparative Examples 1 and 2, as well as on the Examples, using a three-point bending test machine, with both ends of each test piece supported constrainedly and a span of 1000 mm. The maximum loads and the amounts of absorbed energy were measured. The results are shown in Table 9.

[Table 9]

**Table 9**

| Tes t No. | Classification | Shaped test piece conditions | | | | | Ratio relative to straight tube | |
|---|---|---|---|---|---|---|---|---|
| | | Overall shape | Length W mm | Projection distance δ mm | Bending radii mm | | Ramp load (kN)/(kN) | Absorbed energy (J)/(J) |
| | | | | | R 1 | R 2 | | |
| 12 | Example 1 | FIG.25(a) | 1000 | 20 | 500 | - | 1.06 | 1.17 |
| 13 | Example 2 | FIG.25(a) | 1000 | 20 | 500 | - | 1.09 | 1.21 |
| 14 | Inventive Example 3 | FIG.25(b) | 1000 | 20 | 500 | 1000 | 1.10 | 1.22 |
| 15 | Inventive Example 4 | FIG.25(c) | 1000 | 20 | 500 | 1000 | 1.11 | 1.23 |
| 16 | Comparative Example 1 | - | 1000 | 20 | 6200 | | 1.04 | 1.10 |
| 17 | Comparative Example 2 | - | 1000 | 0 | - | | 1.00 | 1.00 |

| | | | | | | | | |
|---|---|---|---|---|---|---|---|---|
| Note: Examples 1 to 4 are shaped pieces of the bent pipe with a partial bend of radius,---- shaped pieces of the bent pipe wit mixed bends of inward and outward projection, respectively. Comparative Example 1 is a shaped piece of curved tube of radius R entirely. Comparative Example 2 is a straight shaped piece. | | | | | | | | |

It can be understood from the results in Table 9 that, for the Inventive Examples, the maximum ramp load is 1.11 times that for the Comparative Example 2, and the maximum absorbed energy is 1.23 times that for the Comparative Example 2. Therefore, using the Examples of the formed part of the "bent tube with a partial bend of radius R" and the formed part of the "bent tube with mixed bends of inward and outward projection" makes it possible to absorb more energy and to ensure better impact resistance than with the straight formed part, even for a press-formed part that is made of steel sheet.

### INDUSTRIAL APPLICABILITY

According to the present invention, using as a vehicle body reinforcing member for automotive use any one of the "bent tube with a partial bend of radius R", the "bent tube with multiple bends of radius R", and the "bent tube with mixed bends of inward and outward projection" makes it possible to absorb more energy during a vehicle body collision than with a reinforcing member that uses the known straight tube or the "curved tube of radius R entirely". It is also possible to demonstrate better impact resistance as a vehicle body reinforcing member. Thus the dimensions (outside diameter, wall thickness) of the metal tube that is used as the vehicle body reinforcing member can be reduced while impact resistance is maintained. Optimizing the shape in this manner makes it possible to provide the ever higher required level of vehicle body impact resistance at the same time that it reduces the weight of the vehicle body and lowers the cost. The present invention can therefore be widely used as an occupant protection technology.

## Claims

1. A vehicle body reinforcing member (7) made of, as a raw material, (a) a metal tube or (b) a press formed part, which vehicle body reinforcing member (7) is attachable to an automobile body (4) for impact resistance, the vehicle body reinforcing member (7) comprising:
at a plurality of locations in a length-wise direction of the vehicle body reinforcing member, an outwardly projecting bent portion positionable in relation to the outer surface of the automobile body so as to be outwardly projecting; and
between two of said plurality of locations an inwardly projecting bent portion positionable in relation to the outer surface of the automobile body so as to be inwardly projecting.

2. The vehicle body reinforcing member (4) of claim 1, further comprising adjacent to a first of said two of said plurality of locations a straight portion on the other side to said inwardly projecting bent portion.

3. The vehicle body reinforcing member (4) of claim 2, further comprising adjacent to the second of said two of said plurality of locations a straight portion on the other side to said inwardly projecting bent portion.

4. The vehicle body reinforcing member (4) according to any one of claims 1 to 3, **characterized in that** a curvature of the outwardly projecting bent portion at least at one location that may receive impact from outside the automobile body is at least 0.8 m⁻¹.

5. The vehicle body reinforcing member (7) according to any one of claims 1 to 4, **characterized in that** an end portion of the vehicle body reinforcing member is one of a straight portion, another outwardly projecting bent portion that has a different curvature than that of said outwardly projecting bent portion, and another inwardly projecting bent portion that has a different curvature than that of said outwardly projecting bent portion.

6. The vehicle body reinforcing member (7) according to any one of claims 1 to 5, **characterized in that** a cross section shape of a metal tube as the raw material for the vehicle body reinforcing member is one of a circle, an oblong, a rectangle, an oval, an open tube, a bell and a semi-cylindrical shape.

7. The vehicle body reinforcing member (7) according to any one of claims 1 to 6, **characterized in that** the vehicle body reinforcing member is used as an impact resistance member for one of a door impact bar, a front bumper beam, a rear bumper beam, a cross member, a front pillar reinforcement, a center pillar reinforcement, and a side sill.

8. A method of manufacturing a vehicle body reinforcing member (7) according to any one of claims 1 to 7, **characterized in that** said raw material is a metal tube and any of the outwardly projecting bent portions and the inwardly projecting bent portions is formed, while moving the metal tube as the raw material successively in the axial direction, by using a high-frequency induction heating coil that is arranged around an outer circumference of the metal tube to heat a localized portion of the metal tube to a temperature range in which plastic deformation is possible and a temperature range in which hardening is possible, then forming each of the bent portions by imparting a bending moment to the heated portion, then rapidly cooling the heated portion.

9. A method of manufacturing a vehicle body reinforcing member (7) according to any one of claims 1 to 7, **characterized in that** said raw material is a press-formed part and any of the outwardly projecting bent portions and the inwardly projecting bent portions is formed, while moving the metal tube as the raw material successively in the axial direction, by using a high-frequency induction heating coil that is arranged around an outer circumference of the metal tube to heat a localized portion of the metal tube to a temperature range in which plastic deformation is possible and a temperature range in which hardening is possible, then forming each of the bent portions by imparting a bending moment to the heated portion, then rapidly cooling the heated portion.

## Patentansprüche

1. Fahrzeugkörperverstärkungsteil (7), welches als ein Rohmaterial aus (a) einem Metallrohr oder (b) einem pressgeformten Teil gemacht ist, wobei das Fahrzeugkörperverstärkungsteil (7) an einem Automobilkörper (4) für Aufprallwiderstand angebracht werden kann, wobei das Fahrzeugkörperverstärkungsteil (7) umfasst:
an einer Vielzahl von Orten entlang einer Längsrichtung des Fahrzeugkörperverstärkungsteils einen nach außen hervorstehenden Krümmungsabschnitt, der in Bezug auf die äußere Oberfläche des Automobilkörpers derart positionierbar ist, dass er nach außen hervorsteht; und
zwischen zwei der Vielzahl von Orten einen nach innen hervorstehenden Krümmungsabschnitt, der in Bezug auf die äußere Oberfläche des Automobilkörpers derart positioniert werden kann, dass er nach innen hervorsteht.

2. Fahrzeugkörperverstärkungsteil (4) nach Anspruch 1, weiterhin angrenzend an einen ersten von den zwei der Vielzahl von Orten einen geraden Abschnitt auf der anderen Seite von dem nach innen hervorstehenden Krümmungsabschnitt umfassend.

3. Fahrzeugkörperverstärkungsteil (4) nach Anspruch 2, weiterhin angrenzend an den zweiten der zwei der Vielzahl von Orten einen geraden Abschnitt auf der anderen Seite von dem nach innen hervorstehenden Krümmungsabschnitt umfassend.

4. Fahrzeugkörperverstärkungsteil (4) gemäß einem der Ansprüche 1 bis 3, **dadurch gekennzeichnet, dass** eine Krümmung des nach außen hervorstehenden Krümmungsabschnitts zumindest an einem Ort, der einen Aufprall von außerhalb des Automobilkörpers erhalten kann, mindestens 0,8 m⁻¹ ist.

5. Fahrzeugkörperverstärkungsteil (7) gemäß einem der Ansprüche 1 bis 4, **dadurch gekennzeichnet, dass** ein Endabschnitt des Fahrzeugkörperverstärkungsteils eines von einem geraden Abschnitt, einem weiteren nach außen hervorstehenden Krümmungsabschnitt, der eine andere Krümmung als die von dem nach außen hervorstehenden Krümmungsabschnitt hat, und ein weiterer nach innen hervorstehender Krümmungsabschnitt, der eine andere Krümmung als die von dem nach außen hervorstehenden Krümmungsabschnitt hat.

6. Fahrzeugkörperverstärkungsteil (7) gemäß einem der Ansprüche 1 bis 5, **dadurch gekennzeichnet, dass** eine Querschnittsform eines Metallrohrs als das Rohmaterial für das Fahrzeugkörperverstärkungsteil eines von einem Kreis, einem länglichen Teil, einem Rechteck, einem Oval, einem offenen Rohr, einer Glocke und einer halbzylindrischen Form ist.

7. Fahrzeugkörperverstärkungsteil (7) gemäß einem der Ansprüche 1 bis 6, **dadurch gekennzeichnet, dass** das Fahrzeugkörperverstärkungsteil als ein Aufprallwiderstandsteil für eines von einer Türaufprallstange, eines vorderen Stoßstangenholms, eines rückwärtigen Stoßstangenholms, eines Kreuzteils, einer vorderen Säulenverstärkung, einer Zentralsäulenverstärkung und einer Seitenschwelle verwendet wird.

8. Verfahren zum Herstellen eines Fahrzeugkörperverstärkungsteils (7) gemäß einem der Ansprüche 1 bis 7, **dadurch gekennzeichnet, dass** das Rohmaterial ein Metallrohr ist und jeder der nach außen hervorstehenden Krümmungsabschnitte und der nach innen hervorstehenden Krümmungsabschnitte ausgebildet wird, während das Metallrohr als das Rohmaterial sukzessive in der Axialrichtung bewegt wird, unter Verwendung einer Hochfrequenzinduktionsheizspule, die um einen äußeren Umfang des Metallrohrs angeordnet ist, um einen lokalisierten Abschnitt des Metallrohrs auf einen Temperaturbereich zu erhitzen, in dem Kunststoffverformung möglich ist, und einen Temperaturbereich, in dem Aushärten möglich ist, dann Ausbilden von jedem der Krümmungsabschnitte durch Aufprägen eines Krümmungsmoments auf den erhitzten Abschnitt, dann schnelles Abkühlen des erhitzten Abschnitts.

9. Verfahren zum Herstellen eines Fahrzeugkörperverstärkungsteils (7) gemäß einem der Ansprüche 1 bis 7, **dadurch gekennzeichnet, dass** das Rohmaterial ein pressgeformtes Teil ist und jeder der nach außen hervorstehenden Krümmungsabschnitte und der nach innen hervorstehenden Krümmungsabschnitte ausgebildet wird, während das Metallrohr als das Rohmaterial sukzessive in der axialen Richtung bewegt wird unter Verwendung einer Hochfrequenzinduktionsheizspule, die um einen äußeren Umfang des Metallrohrs angeordnet ist, um einen lokalisierten Abschnitt des Metallrohrs auf einen Temperaturbereich zu erhitzen, in dem Kunststoffverformung möglich ist, und einen Temperaturbereich, in dem Aushärten möglich ist, dann Ausbilden von jedem der Krümmungsabschnitte durch Aufprägen eines Krümmungsmoments auf den erhitzten Abschnitt, dann schnelles Abkühlen des erhitzten Abschnitts.

## Revendications

1. Elément de renforcement de carrosserie de véhicule (7) fait, en tant que matière brute, (a) d'un tube métallique ou (b) d'une pièce formée à la presse, lequel élément de renforcement de carrosserie de véhicule (7) peut être fixé à une carrosserie d'automobile (4) pour la résistance aux chocs, l'élément de renforcement de carrosserie de véhicule (7) comprenant :
en une pluralité d'endroits dans une direction de longueur de l'élément de renforcement de carrosserie de véhicule, une partie courbée faisant saillie vers l'extérieur, positionnable relativement à la surface extérieure de la carrosserie d'automobile afin de faire saillie vers l'extérieur ; et
entre deux desdits endroits, une partie courbée faisant saillie vers l'intérieur, positionnable relativement à la surface extérieure de la carrosserie d'automobile afin de faire saillie vers l'intérieur.

2. Elément de renforcement de carrosserie de véhicule (4) selon la revendication 1, comprenant en outre, au voisinage d'un premier desdits deux desdits endroits, une partie droite de l'autre côté par rapport à ladite partie courbée faisant saillie vers l'intérieur.

3. Elément de renforcement de carrosserie de véhicule (4) selon la revendication 2, comprenant en outre, au voisinage du deuxième desdits deux desdits endroits, une partie droite de l'autre côté par rapport à ladite partie courbée faisant saillie vers l'intérieur.

4. Elément de renforcement de carrosserie de véhicule (4) selon l'une quelconque des revendications 1 à 3, **caractérisé en ce qu'**une courbure de la partie courbée faisant saillie vers l'extérieur au moins en un endroit qui peut recevoir un choc depuis l'extérieur de la carrosserie d'automobile vaut au moins 0,8 m⁻¹.

5. Elément de renforcement de carrosserie de véhicule (7) selon l'une quelconque des revendications 1 à 4, **caractérisé en ce qu'**une partie d'extrémité de l'élément de renforcement de carrosserie de véhicule est soit une partie droite, soit une autre partie courbée faisant saillie vers l'extérieur qui a une courbure différente de celle de ladite partie courbée faisant saillie vers l'extérieur, soit une autre partie courbée faisant saillie vers l'intérieur qui a une courbure différente de celle de ladite partie courbée faisant saillie vers l'extérieur.

6. Elément de renforcement de carrosserie de véhicule (7) selon l'une quelconque des revendications 1 à 5, **caractérisé en ce qu'**une forme de section transversale d'un tube métallique servant de matière brute pour l'élément de renforcement de carrosserie de véhicule est une forme choisie parmi un cercle, une forme oblongue, un rectangle, un ovale, un tube ouvert, une cloche et une forme semi-cylindrique.

7. Elément de renforcement de carrosserie de véhicule (7) selon l'une quelconque des revendications 1 à 6, **caractérisé en ce que** l'élément de renforcement de carrosserie de véhicule est utilisé comme élément de résistance aux chocs pour un élément parmi une barre antichoc de porte, un caisson de pare-chocs avant, un caisson de pare-chocs arrière, un élément transversal, un renfort de montant avant, un renfort de montant central et un longeron.

8. Procédé de fabrication d'un élément de renforcement de carrosserie de véhicule (7) selon l'une quelconque des revendications 1 à 7, **caractérisé en ce que** ladite matière brute se présente sous la forme d'un tube métallique et l'une quelconque des parties courbées faisant saillie vers l'extérieur et des parties courbées faisant saillie vers l'intérieur est formée, tout en déplaçant le tube métallique servant de matière brute successivement dans la direction axiale, en utilisant une bobine de chauffage par induction à haute fréquence qui est placée autour d'une périphérie extérieure du tube métallique pour chauffer une partie localisée du tube métallique dans une plage de températures dans laquelle une déformation plastique est possible et une plage de température dans laquelle la trempe est possible, puis en formant chacune des parties courbées en imprimant un moment de flexion à la partie chauffée, et en refroidissant ensuite rapidement la partie chauffée.

9. Procédé de fabrication d'un élément de renforcement de carrosserie de véhicule (7) selon l'une quelconque des revendications 1 à 7, **caractérisé en ce que** ladite matière brute est une pièce formée à la presse et l'une quelconque des parties courbées faisant saillie vers l'extérieur et des parties courbées faisant saillie vers l'intérieur est formée, tout en déplaçant le tube métallique servant de matière brute successivement dans la direction axiale, en utilisant une bobine de chauffage par induction à haute fréquence qui est placée autour d'une périphérie extérieure du tube métallique pour chauffer une partie localisée du tube métallique dans une plage de températures dans laquelle une déformation plastique est possible et une plage de température dans laquelle la trempe est possible, puis en formant chacune des parties courbées en imprimant un moment de flexion à la partie chauffée, et en refroidissant ensuite rapidement la partie chauffée.
